# EUROPÄISCHE PATENTSCHRIFT

(11) **EP 3 675 300 B1**
(45) Veröffentlichungstag und Bekanntmachung des Hinweises auf die Patenterteilung: **17.05.2023**
(21) Anmeldenummer: 19213281.9
(22) Anmeldetag: 03.12.2019
(51) Int. Cl.: H02G 3/12, H02G 3/08

(54) **ADAPTER ZUR POSITIONIERUNG UND BEFESTIGUNG EINES INSTALLATIONSGEHÄUSES**
ADAPTER FOR POSITIONING AND FIXING AN INSTALLATION HOUSING
ADAPTATEUR DE POSITIONNEMENT ET DE FIXATION D'UN BOÎTIER D'INSTALLATION

(30) Priorität: 27.12.2018 DE 102018133623
(43) Veröffentlichungstag der Anmeldung: 01.07.2020
(73) Patentinhaber: Schneider Electric Industries SAS, 92500 Rueil Malmaison (FR)
(72) Erfinder: Narayanan, Shree Ganesh, 51643 Gummersbach (DE); Kullolli, Dharmveer, 51674 Wiehl (DE)
(74) Vertreter: Herrmann, Jochen

(56) Entgegenhaltungen:
- EP-A2- 1 675 237
- GB-A- 2 556 022
- KR-B1- 100 798 331
- US-A- 3 620 404
- US-A1- 2010 252 552
- US-B1- 7 544 889

## Beschreibung

Die Erfindung betrifft einen Adapter zur Positionierung und Befestigung eines Installationsgehäuses in einer in eine Wand eingebrachten Wandausnehmung.

Aus dem Stand der Technik sind Installationsgehäuse zur Aufnahme elektronischer Installationsgeräte bekannt, welche zur Anordnung in Wandausnehmungen vorgesehen sind. Solche Installationsgehäuse können einen quadratischen oder einen rechteckigen Querschnitt aufweisen. Da die Ausbildung von quadratischen oder rechteckigen Wandausnehmungen aufwändig ist, werden quadratische oder rechteckige Installationsgehäuse bevorzugt in einzelne oder benachbarte, sich gegenseitig überlappende Bohrungen eingesetzt. Mittels überlappender Bohrungen können große Wandausnehmung ausgebildet werden, um entsprechend große Installationsgehäuse aufnehmen zu können. Die Durchmesser und die Abstände der sich überlappenden Bohrungen sind standardisiert, sodass in standardisierten Rastermaßen ausgebildete Installationsgehäuse in die Wandausnehmungen eingesetzt werden können.

Um quadratische oder rechteckige Installationsgehäuse innerhalb einer oder mehrerer, sich überlappender Wandbohrungen mit jeweils zumindest annähernd kreisrundem Querschnitt korrekt ausrichten und befestigen zu können sind Fixierhilfen bekannt, welche einen Übergang von der geraden Seitenwand des Installationsgehäuses zu der abgerundeten Seitenwandung der Wandausnehmung herstellen. Dabei sind die Fixierhilfen derart ausgebildet, dass sie an die standardisierten Abmessungen der Wandausnehmungen und der Installationsgehäuse angepasst sind und einen geeigneten Abstand zwischen der Seitenwandung der Wandausnehmung und der Gehäusewand des Installationsgehäuses herstellen. Bekannte Fixierhilfen weisen einen in Tiefenrichtung der Wandausnehmung auszurichtenden Grundkörper mit daran angeformten, entlang des Grundkörpers aufeinanderfolgenden rippenförmigen Vorsprüngen auf, welche sich an der Seitenwandung der Wandausnehmung anlehnen. Gegenüberliegend liegt die Fixierhilfe an einer Gehäusewand des Installationsgehäuses an, wodurch dieses gegenüber der Wandausnehmung positioniert ist.

Der Querschnitt der eine Wandausnehmung bildenden Bohrungen kann deutlich von einem kreisrunden Querschnitt abweichen. Dies gilt insbesondere für in leicht brechende Wandmaterialien eingebrachte Bohrungen, wie beispielsweise in Ziegelwänden. Die exakte Ausrichtung des Installationsgehäuses ist in solchen unregelmäßig ausgeformten Wandausnehmungen erschwert.

Installationsgehäuse können durch zusätzliche Schraubverbindung an der Wand befestigt werden. Elektrokabel können durch in Gehäusewandung eingebrachte Kabeldurchführungen in das Installationsgehäuse eingeführt werden. Der zwischen dem Installationsgehäuse und der Seitenwandung der Wandausnehmung ausgebildete Spalt wird üblicherweise mit Füllmaterial, beispielsweise mit Beton oder Mörtel, ausgefüllt. Die Vorderseite der Wand kann verputzt werden, sodass das Installationsgehäuse vorderseitig bündig mit der Wandfläche abschließt.

Abschließend wird die elektronische Installationseinheit in das Installationsgehäuse eingesetzt, angeschlossen und an dem Installationsgehäuse befestigt. Dazu kann die Installationseinheit beispielsweise mittels eines übergreifenden Rahmens, der an dem Installationsgehäuse festgeschraubt wird, in diesem gehalten sein. Zur Aufnahme der Befestigungsschrauben sind langgezogene Halteelemente bekannt, welche außenseitig und in Tiefenrichtung der Wandausnehmung ausgerichtet an dem Installationsgehäuse lösbar befestigt sind. Der Öffnung der Wandausnehmung zugewandt weisen solche Halteelemente einen einseitig verschlossenen und gegenüberliegend verschließbaren Hülsenabschnitt auf, in den die Befestigungsschraube eingeschraubt werden kann.

Aus der GB 2556022 ist eine rechteckige elektrische Anschlussdose bekannt, welche in eine Werkzeugwand, Massiv- oder Mauerwand eingesetzt werden kann, um elektrische Apparate oder Vorrichtungen anzubringen. Damit die Anschlussdose in der Wand fixiert und ausgerichtet werden kann, sind Klemmen an den zwei längeren Seiten der Anschlussdose vorgesehen. Eine Klemme besteht aus einem flexiblen Riemen, welcher mit Quergraten versehen ist, einer Verriegelung, Laschen, wobei die Laschen mit erhöhten Graten versehen sind. Um nun die Anschlussdose zu installieren, wird diese in eine entsprechend große Öffnung der Wand eingeschoben. Die flexiblen Riemen werden von Hand zur offenen Seite der Anschlussdose gezogen, bis die Laschen mit der Innenseite der Wand in Kontakt treten. Somit ist die Position der Anschlussdose, durch das Einrasten der Grate der Klemme mit den Graten der Anschlussdose, in der Wand fixiert.

Die US 2010/0252552 A1 betrifft eine Steckdosenhalterung mit einem ersten und zweiten Befestigungsarm und einem ersten und zweiten Federverriegelungsarm. Des Weiteren sind Verriegelungsschlitze gezeigt, in die die Federverriegelungsarme einrasten können. Dadurch kann die Tiefe der Steckdosenhalterung in der Wand angepasst werden. Die Laschen der Befestigungsarme werden an die Innenseite der Wand, in diesem Fall die Innenseite einer Gipskartonplatte, montiert. Somit gewährleisten diese die Befestigung der Steckdosenhalterung an der Gipskartonplatte.

Es ist Aufgabe der Erfindung, einen kostengünstig herstellbaren Adapter bereitzustellen, welcher auf einfache Weise die Ausrichtung und Befestigung eines Installationsgehäuses in Wandausnehmungen ermöglicht.

Die Aufgabe der Erfindung wird gelöst durch einen Adapter zur Positionierung und Befestigung eines Installationsgehäuses in einer in eine Wand eingebrachten Wandausnehmung, wobei der Adapter ein Trägerelement aufweist, wobei an einem Trägerelement eine Anlagefläche zur mittelbaren oder unmittelbaren Anlage an dem Installationsgehäuse vorgesehen ist, wobei das Trägerelement zumindest ein Anschlusselement zur Befestigung an dem Installationsgehäuse aufweist, wobei an dem Trägerelement gegenüberliegend zu der Anlagefläche in Tiefenrichtung und quer zur Tiefenrichtung beabstandet zueinander angeordnete Positionierlaschen angeordnet sind, und wobei die Positionierlaschen von dem Trägerelement weg weisend ausgerichtet sind und von dem Trägerelement abgewandt Anlegekanten ausbilden.

Mit der Anlagefläche kann der Adapter an einer Seitenwand des Installationsgehäuses angelegt werden. Dadurch werden bei der Montage in einer Wandausnehmung auf den Adapter einwirkende Kräfte großflächig auf das Installationsgehäuse übertragen, wodurch eine Verformung des Installationsgehäuses vermieden wird. Das Anschlusselement ermöglicht eine feste Verbindung zwischen dem Adapter und dem Installationsgehäuse. Zwei oder mehrere Adapter können so an dem Installationsgehäuse vormontiert und anschließend das Installationsgehäuse mit dem Adapter in eine vorgesehene Wandausnehmung eingesetzt werden. Die Positionierlaschen treten dabei mit ihren Anlegekanten in Kontakt mit der Seitenwandung der Wandausnehmung. Sie stellen den vorgegebenen Abstand zwischen der Seitenwandung der Wandausnehmung und dem Installationsgehäuse her. Damit wird eine exakte Positionierung des Installationsgehäuses innerhalb der Wandausnehmung erreicht. Durch die Positionierlaschen sind die Adapter und damit das Installationsgehäuse in der Wandausnehmung gehalten, wobei das Installationsgehäuse in Tiefenrichtung der Wandausnehmung sowie in Umfangsrichtung weiter ausgerichtet werden kann. Die sowohl in Tiefenrichtung wie auch quer zur Tiefenrichtung beabstandet zueinander angeordneten Positionierlaschen verhindern einen verkanteten Einschub und Einbau des Installationsgehäuses in der Wandausnehmung.

Entsprechend einer besonders bevorzugten Ausgestaltungsvariante der Erfindung kann es vorgesehen sein, dass wenigstens eine der Positionierlaschen einen Federbereich bildet oder aufweist, derart, dass die Anlegekante federelastisch gegenüber dem Trägerelement zumindest teilweise in und entgegen der Tiefenrichtung auslenkbar ist. Beim Einschieben des Installationsgehäuses mit den daran befestigten Adaptern in einer Wandausnehmung stoßen die Positionierlaschen bei geeigneter Dimensionierung außenseitig an dem Rand der Wandausnehmung an und werden durch die Einschubbewegung entgegen deren Bewegungsrichtung geneigt. Die Auslenkung erfolgt leichtgängig und führt dazu, dass die Positionierlaschen bei geringer Schrägstellung in die Wandausnehmung gleiten und sich mit ihren Anlegekanten an der Seitenwandung der Wandausnehmung anlegen. Bei zu der Öffnung der Wandausnehmung auf das derart in die Wandausnehmung eingesetzte Installationsgehäuse hin einwirkenden Kräften werden die schräg zu der Seitenwandung angestellten Positionierlaschen mit ihren Anlegekanten gegen die Seitenwandung gedrückt. Dadurch erhöht sich die Haftreibung zwischen den Anlegekanten und der Seitenwandung und das Isolationsgehäuse ist sicher in der Wandausnehmung gehalten. Um das Isolationsgehäuse aus der Wandausnehmung zu nehmen, müssen darauf zur Öffnung der Wandausnehmung hin gerichtete Kräfte einwirken, wobei entweder die verstärkte Haftreibung zwischen den Anlegekanten und der Seitenwandung überwunden oder die Neigung der Positionierlaschen in die entgegengesetzte, dem Inneren der Wandausnehmung zugewandte Richtung verstellt wird. Letzteres erfordert eine Vergrößerung des gegenseitigen Abstandes der Anlegekanten gegenüberliegend an dem Installationsgehäuse angeordneter Adapter, welche jedoch durch die Seitenwandung blockiert ist. Zum Umklappen der Neigung der Positionierlaschen sind somit zusätzliche Verformungen der Positionierlaschen erforderlich, was einen erhöhten Kraftaufwand zur Entnahme des Installationsgehäuses aus der Wandausnehmung notwendig macht.

Besonders vorteilhaft ist eine Drehung des in die Wandausnehmung eingesetzten Installationsgehäuses um eine in Tiefenrichtung gerichtete Achse mit vergleichsweise geringem Kraftaufwand möglich. Das Installationsgehäuse kann daher, nachdem es in die Wandausnehmung eingeschoben wurde, exakt ausgerichtet werden.

Eine kostengünstige Herstellung des Adapters sowie eine einfache Montage an einem vorgesehenen Installationsgehäuse kann dadurch erreicht werden, dass der Adapter als Kunststoffteil ausgebildet ist, wobei die Positionierlaschen einteilig an das Trägerelement angeformt sind. Kunststoffe bieten eine ausreichende Flexibilität, um die gewünschte, federelastische Verstellung der Positionierlaschen zu ermöglichen. Komplexe Geometrien des aus Kunststoff gefertigten Adapters können durch geeignete formgebende Fertigungsverfahren, insbesondere durch Spritzguss, kostengünstig dargestellt werden. Dabei können besonders die Positionierlaschen optimiert für ihre gewünschte Wirkung ausgeformt und durch ihre einstückige Verbindung mit dem Trägerelement gemeinsam mit diesem in geeigneter Ausrichtung an dem Installationsgehäuse befestigt werden.

Ist es vorgesehen, dass quer zur Tiefenrichtung zwei oder mehrere Positionierlaschen, vorzugsweise drei Positionierlaschen, nebeneinander angeordnet sind und/oder dass in Tiefenrichtung jeweils zwei oder mehrere Positionierlaschen, vorzugsweise zwei Positionierlaschen, hintereinander angeordnet sind, so kann das Installationsgehäuse leichtgängig in einer geeignet dimensionierte Wandausnehmung eingesetzt und darin für übliche Anwendungen ausreichend belastbar gehalten werden. Ein Kippen des Installationsgehäuses innerhalb der Wandausnehmung wird durch die beabstandete Anordnung der Positionierlaschen sicher vermieden.

Wandausnehmungen können einfach durch Bohrungen, insbesondere mit einem Kernbohrer, in eine Wand eingebracht werden. Um größere Wandausnehmung zur Aufnahme entsprechend großer Installationsgehäuse in einer Wand auszubilden können mehrere solcher Bohrungen einander überlappend in die Wand eingetrieben werden. Derart hergestellte Wandausnehmungen weisen demnach kreisrund oder annähernd kreisrund verlaufende Wandungen oder Wandabschnitte auf. Um Installationsgehäuse in Wandausnehmungen mit entlang oder annähernd entlang von Kreisabschnitten verlaufenden Seitenwandungen mittels der Adapter exakt ausgerichtet montieren zu können, kann es vorgesehen sein, dass quer zur Tiefenrichtung wenigstens drei Positionierlaschen vorgesehene sind, wobei eine mittige Positionierlasche mittig vom Trägerelement absteht, und wobei seitlich zu der mittigen Positionierlasche die seitlichen Positionierlaschen von dem Trägerelement abstehen, und dass die Anlegekante der mittigen Positionierlasche in größerem Abstand von dem Trägerelement gehalten ist als die Anlegekante der seitlichen Positionierlaschen. Das Trägerelement liegt vorteilhaft mit seiner Anlagefläche an einer ebenen Gehäusewandung des Installationsgehäuses an. Bei durch in etwa kreisrunde Bohrungen hergestellten Wandausnehmung ergibt sich der größte Abstand zwischen dem Trägerelement und der Seitenwandung der Wandausnehmung im quer zur Tiefenrichtung der Wandausnehmung gemessenen Mittenbereich des Trägerelements, während sich dieser Abstand zu den seitlichen Positionierlaschen hin stetig verringert. Durch den größeren Abstand zwischen der Anlegekante der mittigen Positionierlasche und dem Trägerelement, im Vergleich zu dem Abstand zwischen der Anlegekanten der äußeren Positionierlaschen und dem Trägerelement, folgen die Anlegekanten der Kontur der Seitenwandung der Wandausnehmung und liegen bei korrekt in der Wandausnehmung ausgerichtetem Installationsgehäuse, vorzugsweise bei geeigneter Neigung der Positionierlaschen, bestimmungsgemäß an der Seitenwandung an.

Eine Optimierung des Adapters zur Verwendung in aus kreisrunden oder zumindest annähernd kreisrunden Bohrungen hergestellten Wandausnehmungen kann dadurch erreicht werden, dass die Anlegekanten quer zur Tiefenrichtung zueinander benachbarter Positionierlaschen auf einem gleichem Radius zu einer gemeinsamen, in Tiefenrichtung ausgerichteten Mittelachse verlaufend angeordnet sind. Die Anlegekante des Adapters folgen somit der Kontur der Seitenwandung der Wandausnehmung.

Eine vereinfachte Ausrichtung des Installationsgehäuses gegenüber der Wandausnehmung sowie eine verbesserte Haftung zwischen dem Adapter und der Seitenwandung einer Wandausnehmung können dadurch erreicht werden, dass an dem Trägerelement und/oder an einer oder mehrere der Positionierlaschen ein oder mehrere Fixieransätze abstehend angeordnet sind. Bei an den Positionierlaschen angeordneten Fixieransätze kann es vorteilhaft vorgesehen sein, dass der oder die Fixieransätze einen größeren Abstand zu dem Trägerelement aufweisen als die Anlegekante der jeweiligen Positionierlasche. Die derart angeordneten Fixieransätze verkrallen sich verstärkt in der Seitenwandung der Wandausnehmung. Die Fixieransätze sind dafür geeignet, Abweichungen in der Formgebung der Wandausnehmungen, welche beispielsweise zu vergrößerten Abmessungen der Wandausnehmung bzw. zu einem vergrößerten Abstand zwischen dem Trägerelement und der Seitenwandung der Wandausnehmung führen, auszugleichen. Sie dienen darüber hinaus auch zu einem verbesserten Halt in der Montageposition.

Aus Gründen der vereinfachten Montage des Adapters an dem Installationsgehäuse kann es vorteilhaft sein, dass das zumindest eine Anschlusselement als Gleitführung ausgebildet ist, vorzugsweise dass das zumindest eine Anschlusselement als in Tiefenrichtung ausgerichtete Gleitführung ausgebildet ist, besonders bevorzugt dass das zumindest eine Anschlusselement als in Tiefenrichtung ausgerichtete Gleitführung in Form einer Schwalbenschwanzführung ausgebildet ist. Der Adapter kann mit seiner Gleitführung ohne großen Aufwand auf eine komplementär an dem Installationsgehäuse ausgebildete Gleitführung aufgeschoben und die Verbindung zu dem Installationsgehäuse damit hergestellt werden. Die Ausrichtung der Gleitführung entlang der Tiefenrichtung ist dahingehend vorteilhaft, dass sie über ihre Längserstreckung entlang gleicher geometrischer Abmessungen des Adapters verlaufend angeordnet ist. Der Adapter kann einfach, beispielsweise am rückwärtigen Abschluss der Gehäusewand, angesetzt, ausgerichtet und dann entlang der Gleitführung auf das Installationsgehäuse aufgeschoben werden. Die Form einer Schwalbenschwanzführung ist vorteilhaft, da sie kostengünstig herstellbar ist und lediglich eine gegenseitige Bewegung des Adapters und des Installationsgehäuses entlang ihrer Längserstreckung zulässt, während sie quer dazu gerichtete Bewegungen formschlüssig blockiert. Die in Tiefenrichtung mit dem Trägerelement vorzugsweise einstückig verbundene Gleitführung führt zu einer beabsichtigten Versteifung des Trägerelements und damit des Adapters. Dabei wirkt die Gleitführung einer Biegung des Trägerelements entlang der Tiefenrichtung entgegen.

Um eine Verwindung bzw. Verformung des Trägerelements im Bereich der Gleitführung zu vermeiden oder zumindest zu verringern kann es vorgesehen sein, dass gegenüberliegend und quer zur Gleitführung angeordnet und ausgerichtet zumindest eine Positionierlasche mit dem Trägerelement verbunden ist. Die im Winkel zu dem Trägerelement mit diesem verbundene Positionierlasche führt zu einer gewünschten Versteifung des Trägerelements. Dabei wird durch die Positionierlasche eine Verformung des Trägerelements quer zur Tiefenrichtung behindert. Zusammen mit der entlang der Tiefenrichtung versteifend wirkenden Gleitführung wird auf diese Weise das vorzugsweise flächig ausgebildete Trägerelement in beide in der Ebene des Trägerelements liegenden und im Winkel aufeinander stehenden Richtungen, also in und quer zur Tiefenrichtung, stabilisiert.

Die exakte Positionierung des Adapters gegenüber dem Installationsgehäuses kann dadurch sichergestellt werden, dass an dem Trägerelement und/oder dem Anschlusselement zumindest ein Begrenzungselement zur Begrenzung des Stellwegs des Installationsgehäuses gegenüber dem Adapter in Tiefenrichtung angeordnet ist und/oder dass an dem Trägerelement und/oder dem Anschlusselement zumindest ein Rastelement zur Ausbildung einer Rastverbindung mit einem an dem Installationsgehäuse vorgesehenen Gegenrastelement angeordnet ist. Das Begrenzungselement begrenzt den Stellweg beim Aufschieben des Adapters auf das Installationsgehäuse in Einschubrichtung. Die Rastverbindung blockiert zusätzlich eine Bewegung des Adapters gegenüber dem Installationsgehäuse entgegen der Einschubrichtung. Im Zusammenwirken mit dem Anschlusselement ist der Adapter damit in alle Raumrichtung gegenüber dem Installationsgehäuse blockiert.

Die Begrenzung des Stellweges des Adapters gegenüber dem Installationsgehäuse kann bei geringen Herstellkosten des Adapters dadurch einfach erreicht werden, dass das Begrenzungselement an dem Träger einteilig angeformt ist und über die Anlagefläche vorsteht.

Um das Installationsgehäuse besonders belastbar in einer Wandausnehmung festlegen zu können kann es vorgesehen sein, dass an dem Trägerelement und/oder an einer oder mehrere der Positionierlaschen, vorzugsweise an den vorderen äußeren Positionierlaschen, Montageelemente mit jeweils einer schräg zur Tiefenrichtung ausgerichteten Schraubenaufnahmen angeordnet sind. Durch die Schraubenaufnahmen können Schrauben geführt und in die Wand eingeschraubt werden. Durch die schräge Ausrichtung der Schraubenaufnahmen werden die Schrauben zu der Seitenwandung der Wandausnehmung geführt. Durch den damit verbundenen, schrägen Eintritt der Schrauben in die Wand ist eine ausreichend verfügbare Einschraubtiefe der Schrauben in der Wand gewährleistet. Gleichzeitig werden bei in oder entgegen der Tiefenrichtung auf das Installationsgehäuse einwirkenden Kräften die Schrauben schräg zu ihrer Längserstreckung belastet. Es können somit beispielsweise auch bei leicht brüchigem Mauerwerk große, auf das Installationsgehäuse einwirkende Belastungen abgefangen werden. Die mit dem Trägerelement und/oder mit zumindest einer der Positionierlaschen verbundenen Montageelemente führen zusätzlich und vorteilhaft zu einer Versteifung des Adapters.

Für bestimmte Anwendungen und Einbausituationen des Installationsgehäuses kann es erforderlich sein, an der Außenseite seiner Gehäusewand zusätzliche Baugruppen anzuordnen. So ist es bekannt, außen an der Gehäusewand Halteelemente zu befestigen, welche die Fixierung von in das Installationsgehäuse eingesetzten elektrischen Installationsgeräten ermöglichen. Die Halteelemente können beispielsweise als lang gestreckte Bauteile mit Hülsenabschnitten ausgeführt sein, in welche Schrauben zur Festlegung des jeweiligen Installationsgeräts eingeschraubt werden können. Um solche Baugruppen, insbesondere Halteelemente, auch im Bereich eines Adapters an dem Installationsgehäuse anordnen zu können kann es vorgesehen sein, dass der Adapter zumindest eine sich in Tiefenrichtung erstreckende, zur Unterseite des Adapters und in Tiefenrichtung hin geöffnete Aufnahme aufweist. Ein derart ausgebildeter Adapter kann, wie zuvor beschrieben, entlang der Tiefenrichtung auf das Installationsgehäuse aufgeschoben werden. Dabei wird die außenseitig an das Installationsgehäuse angebrachte Baugruppe, insbesondere das Halteelement, durch die in Tiefenrichtung ausgebildete Öffnung in die Aufnahme geführt und bei Erreichen der gewünschten Endposition des Adapters von der Aufnahme zumindest bereichsweise umfasst.

Entsprechend einer vorteilhaften Ausgestaltungsvariante der Erfindung kann es vorgesehen sein, dass die Aufnahme von Wandelementen begrenzt ist, die über die Oberseite des Trägerelements, welche der Anlagefläche abgekehrt ist, vorstehen, und dass zumindest eine Positionierlasche die Aufnahme zumindest bereichsweise übergreift und wenigstens teilweise an die Wandelemente einteilig angeformt ist. Die Wandelemente führen zu einer gewünschten Versteifung des Trägerelements und damit des Adapters. Sie blockieren mit ihrer Ausrichtung entlang der Tiefenrichtung insbesondere eine Durchbiegung des Trägerelements entlang dieser Richtung. Die die Aufnahme zumindest bereichsweise begreifende Positionierlasche bewirkt hingegen eine Versteifung des Trägerelements quer zur Tiefenrichtung. Dadurch wird eine Bewegung der im Winkel zu dem Trägerelement an dieses vorzugsweise angeformten Wandelemente aufeinander zu oder voneinander weg, also ein Auf- und Zubiegen der Aufnahme, verhindert.

Um auch im Bereich eines an dem Installationsgehäuse befestigten Adapters Kabel in das Innere des Installationsgehäuses führen zu können kann es vorgesehen sein, dass das Trägerelement von zumindest einem, als Kabeldurchführung ausgebildeten Durchbruch durchdrungen ist. Vorteilhaft ist die Kabeldurchführung bei korrekt montiertem Adapter fluchtend zu einem in die Gehäusewandung des Installationsgehäuses eingebrachten Kabeldurchbruch ausgerichtet, sodass ein Kabel einfach und geradlinig in das Gehäuseinnere eingeführt werden kann. Besonders vorteilhaft ist die Kabeldurchführung von einer hülsenförmigen Kabelführung eingefasst, welche umlaufend zu der Kabeldurchführung einstückig mit dem Trägerelement verbunden ist. Eine derartige Kabelführung bewirkt eine in der Ebene des Trägerelements wirkende Versteifung und trägt damit maßgeblich zur Stabilität des Adapters bei.

Sowohl die federelastische Auslenkung der Positionierlaschen entlang der Tiefenrichtung wie auch deren versteifende Wirkung quer zur Tiefenrichtung können erreicht werden, wenn vorgesehen ist, dass die Positionierlaschen flächig ausgebildet und quer zur Tiefenrichtung ausgerichtet sind.

Die Erfindung wird im Folgenden anhand der in den Zeichnungen dargestellten Ausführungsbeispiele näher erläutert. Es zeigen:
- Fig. 1: in einer perspektivischen Darstellung mit Blick auf dessen Oberseite einen Adapter zur Positionierung und Befestigung eines Installationsgehäuses in einer Wandausnehmung mit Montageelementen und ersten Fixieransätzen,
- Fig. 2: den in Fig. 1 gezeigten Adapter in einer Draufsicht,
- Fig. 3: den in Fig. 1 gezeigten Adapter in einer perspektivischen Darstellung mit Blick auf die Unterseite,
- Fig. 4: in einer perspektivischen Darstellung mit Blick auf die Oberseite einen zweiten Adapter zur Positionierung und Befestigung eines Installationsgehäuses mit zweiten Fixieransätzen,
- Fig. 5: den in Fig. 4 gezeigten zweiten Adapter in einer Draufsicht,
- Fig. 6: den in Fig. 4 gezeigten zweiten Adapter in einer perspektivischen Darstellung mit Blick auf die Unterseite,
- Fig. 7: in einer perspektivischen Darstellung den in Fig. 1 gezeigten Adapter mit eingesetzten Schrauben,
- Fig. 8: in einer perspektivischen Darstellung ein Halteelement mit geöffnetem Verschluss,
- Fig. 9: das in Fig. 8 gezeigte Halteelement mit geschlossenem Verschluss,
- Fig. 10: in einer perspektivischen Darstellung das in Fig. 8 gezeigte Halteelement mit einer Befestigungsschraube,
- Fig. 11: in einer perspektivischen Darstellung ein Installationsgehäuse mit einem aufgesetzten Gehäusedeckel und zur Befestigung gegenüber dem Installationsgehäuse ausgerichteten Halteelementen,
- Fig. 12: das in Fig. 11 gezeigte Installationsgehäuse mit daran befestigten Halteelementen und zur Montage gegenüber dem Installationsgehäuse ausgerichteten Adaptern,
- Fig. 13: das in Fig. 12 gezeigt Installationsgehäuse mit den daran befestigten Halteelementen und Adaptern,
- Fig. 14: in einer perspektivischen Darstellung einen Ausschnitt einer Wand mit einer Wandausnehmung und einem darin angeordneten Installationsgehäuse,
- Fig. 15: den in Fig. 14 gezeigten Wandausschnitt in einer Blickrichtung in Tiefenrichtung der Wandausnehmung und
- Fig. 16: in einer perspektivischen Darstellung das in Fig. 13 gezeigte Installationsgehäuse mit einem teilweise in das Installationsgehäuse eingeschoben Einsatz.

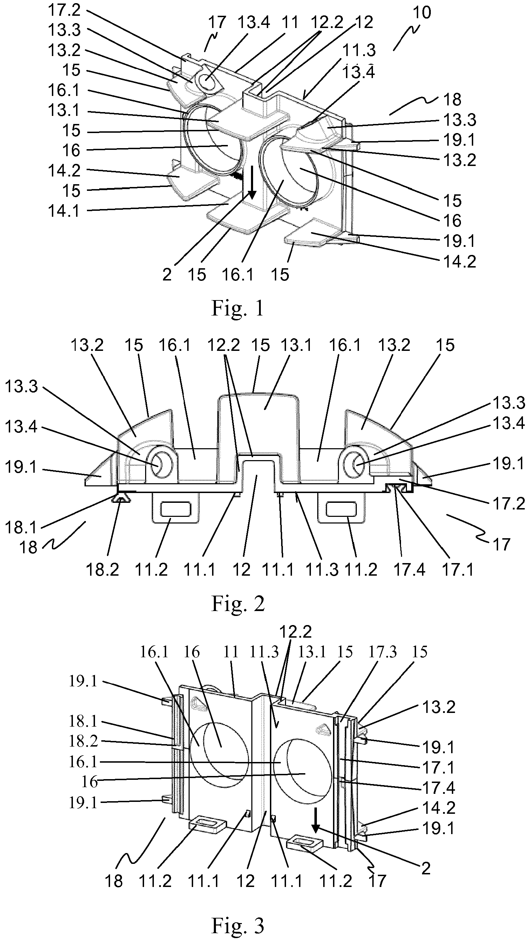

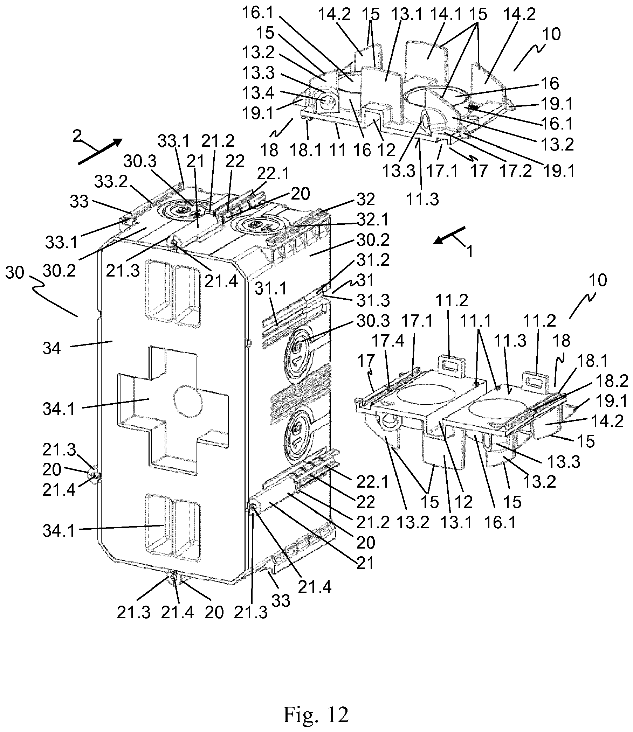

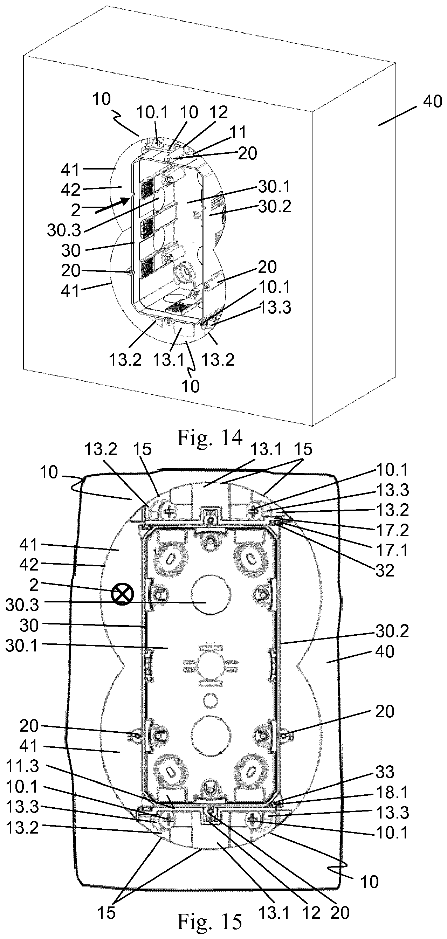

Fig. 1 zeigt in einer perspektivischen Darstellung mit Blick auf dessen Oberseite einen Adapter 10 zur Positionierung und Befestigung eines in Fig. 12 gezeigten Installationsgehäuses 30 in einer in Fig. 15 gezeigten Wandausnehmung 41 mit Montageelementen 13.3 und ersten Fixieransätzen 19.1.

Fig. 2 zeigt den in Fig. 1 gezeigten Adapter in einer Draufsicht.

Fig. 3 zeigt den in Fig. 1 gezeigten Adapter in einer perspektivischen Darstellung mit Blick auf die Unterseite.

Wie den Fig. 1 bis 3 zu entnehmen ist, weist der Adapter 10 ein Trägerelement 11 auf. Das Trägerelement 11 ist als flächiges Bauelement ausgeführt. Es bildet auf seiner Unterseite eine Anlagefläche 11.3 zur mittelbaren oder unmittelbaren Anlage des Installationsgehäuses 30 aus. Eine Tiefenrichtung 2 ist als Pfeil gekennzeichnet. Die Tiefenrichtung 2 bezieht sich auf die Ausrichtung des Adapters in der in Fig. 15 gezeigten Wandausnehmung 41. Sie verläuft in der Ebene des Trägerelements 11. Durch seine vorgegebene Einbaurichtung in der Wandausnehmung 41 ist ein vorderer Bereich bzw. eine Vorderseite des Adapters 10 definiert. Diese entspricht der Seite des Adapters 10, welche in der in Fig. 15 gezeigten Einbausituation in einer Wandausnehmung 41 zur Öffnung der Wandausnehmung 41 hin weist. In Tiefenrichtung 2 gegenüberliegend zu dem vorderen Bereich bzw. der Vorderseite ist entsprechend der hintere Bereich bzw. die Hinterseite des Adapters 10 angeordnet.

Im Mittenbereich des Trägerelements 11 ist eine Aufnahme 12 eingeformt. Die Aufnahme 12 ist als in Tiefenrichtung 2 ausgerichteter Kanal ausgebildet. Sie ist zur Unterseite des Adapters 10 hin und in und entgegen der Tiefenrichtung 2 geöffnet ausgeführt. Zur der der Anlagefläche 11.3 abgewandten Oberseite des Adapters 10 hin ist die Aufnahme 12 durch Wandelemente 12.2 begrenzt. Dazu sind beabstandet zueinander angeordnete Wandelemente 12.2 im Winkel zur Anlagefläche 11.3 ausgerichtet und längsseitig mit einem weiteren, die Aufnahme 12 nach oben abdeckenden Wandelement 12.2 verbunden.

Seitlich der Aufnahme 12 bildet das Trägerelement 11 zwei flache Bereiche aus. In diesen ist das Trägerelement 11 durch jeweils eine Kabeldurchführung 16 durchbrochen, wie dies insbesondere Fig. 1 und Fig. 3 entnommen werden kann. Zur Oberseite hin ist die Kabeldurchführung 16 durch eine zylinderförmige Kabelführung 16.1 eingefasst.

Wie insbesondere den Fig. 2 und 3 zu entnehmen ist, sind auf Seiten der Anlagefläche 11.3 Gleitführungen 17, 18 an das Trägerelement 11 angeformt. Die Gleitführungen 17, 18 sind entlang der Tiefenrichtung 2 ausgerichtet. Sie sind vorliegend als Schwalbenschwanzführungen ausgeführt. Die erste Gleitführung 17 ist als Führungsnut 17.1 ausgebildet. Dazu ist an das Trägerelement 11 eine im wesentlichen U-förmige Einformung 17.2 angeformt, welche die zur Anlagefläche 11.3 hin geöffnete Führungsnuten 17.1 bildet. Durch die zur Oberseite des Adapters 10 hin zurückgestellte, U-förmige Einformung 17.2 schließt die Führungsnut 17.1 in der Ebene der Anlagefläche 11.3 ab. Am vorderen und am hinteren Ende der Führungsnut 17.1 ist jeweils eine Aussparung 17.3 vorgesehen, in denen die Schwalbenschwanzführung ausgespart ist. Im Mittenbereich der Führungsnut 17.1 ist ein erster Anschlagansatz 17.4 angeformt, der in die Führungsnut 17.1 hineinragt.

Quer zur Tiefenrichtung 2 gegenüberliegend zu der ersten Gleitführung 17 ist die zweite Gleitführung 18 an das Trägerelement 11 angeformt. Die zweite Gleitführung 18 ist als Feder 18.1, vorliegend in Form einer Schwalbenschwanzführung, ausgebildet. Diese ragt über die Anlagefläche 11.3 hinaus. Im Mittenbereich der Feder 18.1 ist ein zweiter Anschlagansatz 18.2 an der Feder 18.1 angeformt. Der zweite Anschlagansatz 18.2 ist als Steg ausgebildet, welche die beiden im Winkel zueinander angeordneten Schenkel der Schwalbenschwanzführung verbindet.

Die Gleitführungen 17, 18 bilden Anschlusselemente zur Befestigung des Adapters 20 an dem Installationsgehäuse 30.

Wie insbesondere in Fig. 3 gezeigt ist, sind am hinteren Abschluss der Anlagefläche 11.3 Begrenzungselemente 11.2 im Winkel an das Trägerelement 11 angeformt. Die Begrenzungselemente 11.2 stehen über die Anlagefläche 11.3 über. Sie sind flächig ausgebildet und in Tiefenrichtung 2 jeweils von einem Langloch durchbrochen.

Seitlich der Aufnahme 12 sind zwei Rastelemente 11.1 mit dem Trägerelement 11 verbunden, wie dies den Fig. 2 und 3 entnommen werden kann. Die auf beiden Seiten der Aufnahme 12 angeordneten Rastelement 11.1 ragen über die Anlagefläche 11.3 hinaus. Sie sind im hinteren Bereich des Adapters 10 angeordnet.

Zur Oberseite des Adapters 10 hin weisend sind Positionierlaschen 13.1, 13.2, 14.1, 14.2 an das Trägerelement 11 angeformt, wie diese insbesondere in Fig. 1 und Fig. 2 gezeigt sind. Die Positionierlaschen 13.1, 13.2, 14.1, 14.2 sind flächig ausgeführt. Ihre Ebenen sind quer zur Tiefenrichtung 2 ausgerichtet. Im vorderen und im hinteren Bereich des Adapters 10 sind jeweils drei Positionierlaschen 13.1, 13.2, 14.1, 14.2 quer zur Tiefenrichtung 2 beabstandet nebeneinander angeordnet. Dabei sind im Bereich der Aufnahme 12 jeweils eine mittige Positionierlasche 13.1, 14.1 und auf beiden Seiten davon jeweils eine äußere Positionierlasche 13.2, 14.2 vorgesehen. Die vorderen Positionierlaschen 13.1, 13.2 und die hinteren Positionierlaschen 14.1, 14.2 können jeweils in einer Ebene zueinander ausgerichtet sein.

Die mittigen Positionierlaschen 13.1, 14.1 umgreifen die Aufnahme 12. Sie sind mit den die Aufnahme 12 begrenzenden Wandelementen 12.2 sowie seitlich der Wandelemente 12.2 mit den ebenen Bereichen des Trägerelements 11 verbunden. Hierdurch wird das Trägerelement 11 im Bereich der mittigen Positionierlaschen 13.1,14.1 ausgesteift.

Die äußeren Positionierlaschen 13.2, 14.2 sind gegenüberliegend zu den Gleitführungen 17, 18 an das Trägerelement 11 angeformt. Dabei umfassen die der ersten Gleitführung 17 gegenüberliegenden äußeren Positionierlaschen 13.2, 14.2 deren U-förmige Einformung 17.2 abschnittsweise.

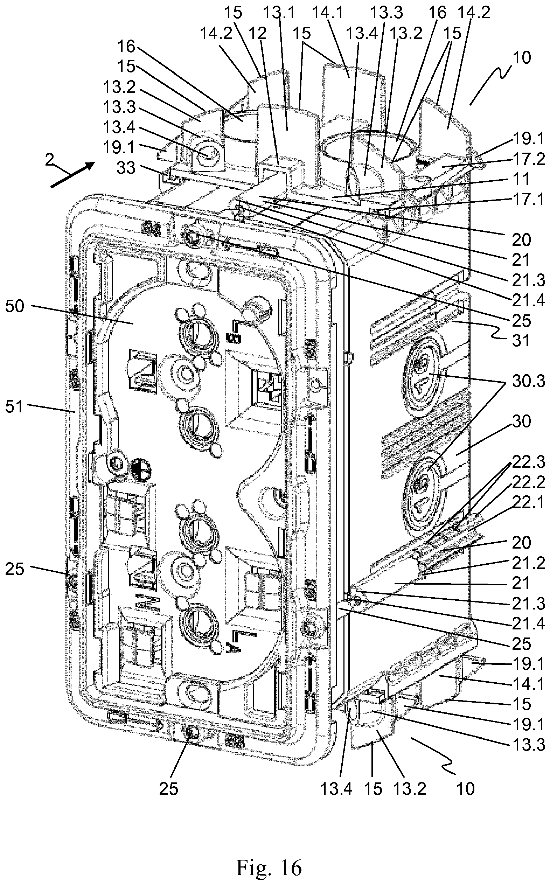

Gegenüberliegend zum Trägerelement 11 sind die Positionierlaschen 13.1, 13.2, 14.1, 14.2 von Anlegekanten 15 abgeschlossen. Die Anlegekanten 15 folgen vorzugsweise der Kontur einer Seitenwandung 42 der Wandausnehmung 41 im Bereich eines Befestigungsabschnitts, an den der Adapter 10 innerhalb einer Wandausnehmung 41 angelegt wird, wie dies insbesondere Fig. 16 zu entnehmen ist. In dem in Fig. 1 und Fig. 2 gezeigten Ausführungsbeispiel sind die Anlegekanten 15 quer zur Tiefenrichtung 2 zueinander benachbarter Positionierlaschen 13.1, 13.2, 14.1, 14.2 auf einem gleichen Radius zu einer gemeinsamen, in Tiefenrichtung 2 ausgerichteten Mittelachse verlaufend angeordnet. Die mittigen Positionierlaschen 13.1, 14.1 erheben sich weiter über das Trägerelement 11 als die äußeren Positionierlaschen 13.2, 14.2.

Der Vorderseite des Adapters 10 zugewandt sind die beiden Montageelemente 13.3 angeordnet. Die Montageelemente 13.3 sind mit dem Trägerelement 11 und jeweils mit einer der vorderen äußeren Positionierlaschen 13.2 verbunden. Sie sind von jeweils einer Schraubenaufnahme 13.4 durchdrungen, welche auch durch die mit den Montageelementen 13.3 verbundenen vorderen äußeren Positionierlaschen 13.2 geführt sind. Gegenüber der Tiefenrichtung 2 sind die Schraubenaufnahmen 13.4 schräg nach außen weisend ausgerichtet.

An den in Tiefenrichtung 2 verlaufenden äußeren Kanten des Trägerelements 11 sind die ersten Fixieransätze 19.1 angeordnet, wie dies den Fig.1 bis 3 zu entnehmen ist. Die ersten Fixieransätze 19.1 sind jeweils mit dem Trägerelement 11 und einem der äußeren Positionierlaschen 13.2, 14.2 einstückig verbunden. Sie sind flächig ausgebildet und in der Ebene der jeweils benachbarten äußeren Positionierlaschen 13.2, 14.2 ausgerichtet. Die Gestaltung der Fixieransätze 19.1 kann beispielsweise so sein, dass sie sich mit steigendem Abstand zu den äußeren Positionierlaschen 13.2, 14.2 entlang einer abgerundet verlaufenden Kurve verjüngen und in einem äußeren, abgeflachten Abschluss enden.

Der Adapter 10 ist vorzugsweise aus einem Kunststoff hergestellt. Die beschriebenen Baugruppen des Adapters 10 sind dabei vorzugsweise einstückig miteinander verbunden.

Die Aufnahme 12 führt mit ihren im Winkel zu der Anlagefläche 11.3 angeordneten Wandelementen 12.2 zu einer Versteifung des Trägerelements 11. Dadurch wird bei einwirkenden Kräften die Durchbiegung des Adapters 10 insbesondere entlang der Tiefenrichtung 2 zumindest verringert. Die Gleitführungen 17, 18 führen durch die U-förmige Einformung 17.2 und die angeformte Feder 18.1 am seitlichen Rand des Trägerelements 11 ebenfalls zu einer in gleicher Richtung wirkenden Versteifung des Adapters 10. Quer zur Tiefenrichtung 2 führen die Positionierlaschen 13.1, 13.2, 14.1, 14.2 zu einer Versteifung des Trägerelements 11. Dabei verhindern die mittigen Positionierlaschen 13.1, 14.1, dass sich die Aufnahme 12 bei einwirkenden Kräften aufbiegt oder ihre äußeren Wandelemente 12.2 aufeinander zu gedrückt werden. Die äußeren Positionierlaschen 13.2, 14.2 stabilisieren das Trägerelement 11 im Bereich der Gleitführungen 17, 18. Damit ist eine sichere Verbindung des Adapters 10 zu einem Installationsgehäuse 30 sichergestellt. Die über die Ebene des Trägerelements 11 ragenden, zylinderförmigen Kabelführungen 16.1 bewirken eine Versteifung der ebenen Bereiche des Trägerelements 11 seitlich der Aufnahme 12. Gleichzeitig ermöglichen die Kabeldurchführung 16 mit den Kabelführungen 16.1, das Kabel durch den Adapter 10 zu dem Installationsgehäuse 30 geführt werden können, ohne dass diese an scharfen Kanten vorbeigeführt werden. Eine Beschädigung der Kabel kann so sicher vermieden werden. Die mit dem Trägerelement 11 und den vorderen äußeren Positionierlaschen 13.2 verbundenen Montageelemente 13.3 tragen ebenfalls zur Versteifung des Trägerelements 11 und damit des Adapters 10 bei. Der Adapter 10 weist daher auch als kostengünstig herstellbares Kunststoffbauteil mit flächig ausgebildetem Trägerelement 11 eine hohe mechanische Stabilität auf.

Durch die Anordnung und Ausrichtung der Positionierlaschen 13.1, 13.2, 14.1, 14.2 und ihre Ausführung als Kunststoffbauteil können ihre abschließenden Anlegekanten 15 in Tiefenrichtung 2 federelastisch ausgelenkt werden.

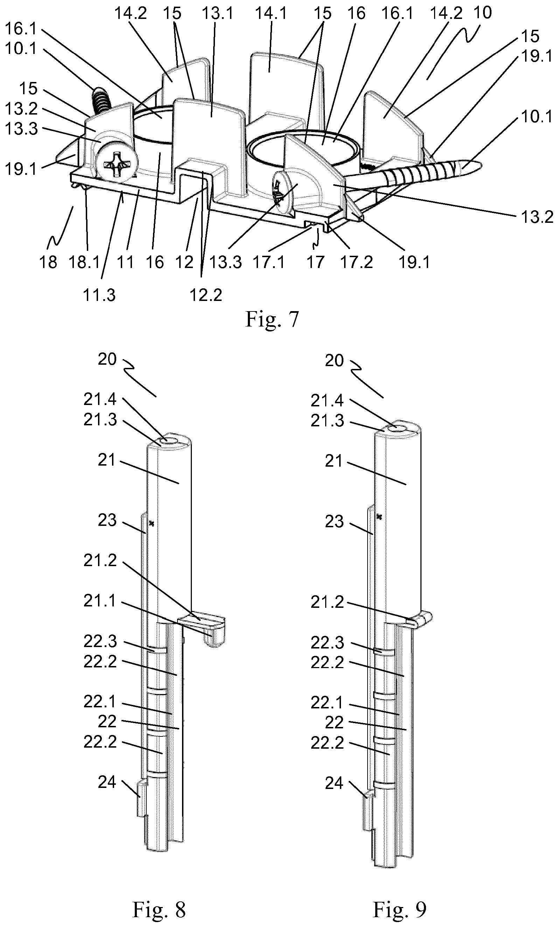

Die Montageelemente 13.3 ermöglichen durch ihre Schraubenaufnahmen 13.4 die Befestigung des Adapters 10 mittels in Fig. 7 gezeigten Schrauben 10.1 in einer Wandausnehmung 41.

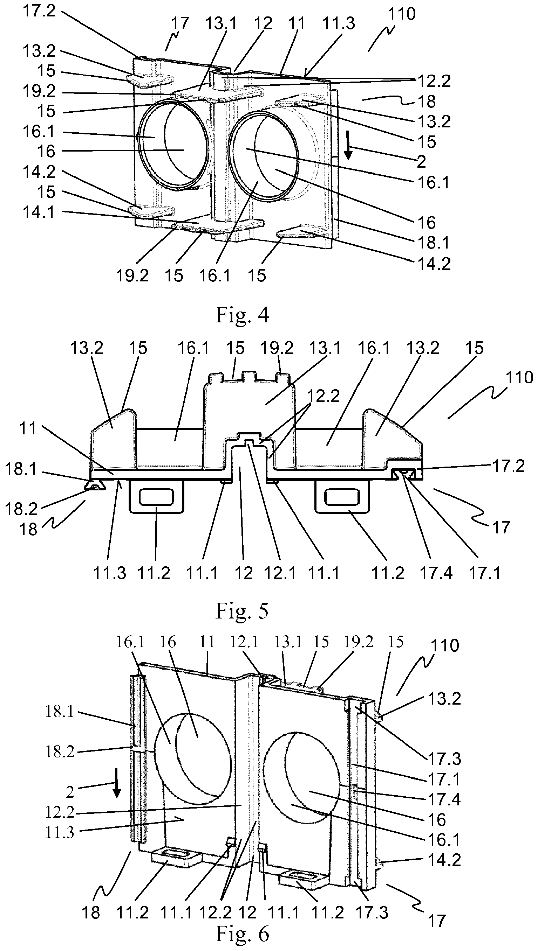

Fig. 4 zeigt in einer perspektivischen Darstellung mit Blick auf die Oberseite einen zweiten Adapter 110 zur Positionierung und Befestigung eines Installationsgehäuses 30 mit zweiten Fixieransätzen 19.2. Fig. 5 zeigt den in Fig. 4 gezeigten zweiten Adapter 110 in einer Draufsicht und Fig. 6 den in Fig. 4 gezeigten zweiten Adapter 110 in einer perspektivischen Darstellung mit Blick auf die Unterseite. Der in den Fig. 4 bis 6 gezeigte zweite Adapter 110 entspricht im Wesentlichen dem in den Fig. 1 bis 3 gezeigten Adapter 10, sodass nachfolgend nur auf die abweichenden Merkmale eingegangen und ansonsten auf die Beschreibung zu den Fig. 1 bis 3 verwiesen wird.

Im Gegensatz zu dem in den Fig. 1 bis 3 gezeigten Adapter 10 weist der in den Fig. 4 bis 6 gezeigt zweite Adapter 110 keine Montageelemente 13.3 und keine ersten Fixieransätze 19.1 auf. Dafür sind an den mittigen Positionierlaschen 13.1, 14.1 zweite Fixieransätze 19.2 angeformt, welche über deren Anlegekanten 15 hervorstehen. In das die Aufnahme 12 nach oben begrenzende Wandelement 12.2 ist eine in Tiefenrichtung 2 verlaufende Kerbe 12.1 eingeformt.

Bei einer Montage des zweiten Adapters 110 in einer Wandausnehmung 41 verkrallen sich die zweiten Fixieransätze 19.2 in einer in Fig. 15 gezeigten Seitenwandung 42 der Wandausnehmung 41. Auf eine zusätzliche Befestigung mittels Schrauben 10.1 kann so verzichtet werden. Die Kerbe 12.1 führt zu einer zusätzlichen Versteifung des Trägerelements 11 und damit des zweiten Adapters 110.

Fig. 7 zeigt in einer perspektivischen Darstellung den in Fig. 1 gezeigten Adapter 10 mit den eingesetzten Schrauben 10.1. Die Schrauben 10.1 sind durch die Schraubenaufnahmen 13.4 der Montageelemente 13.3 und der vorderen äußeren Positionierlaschen 13.2 geführt. Durch die schräge Anordnung der Schraubenaufnahmen 13.4 sind die Schrauben 10.1 mit ihren Spitzen nach außen gerichtet und können entsprechend in die Seitenwandung 42 einer Wandausnehmung 41 eingeschraubt werden. Dabei sind die zur Vorderseite des Adapters 10 hin ausgerichteten Schraubenköpfe von außen gut zugängig.

Fig. 8 zeigt in einer perspektivischen Darstellung ein Halteelement 20 mit geöffnetem Verschluss 21.1. Das Halteelement 20 ist als längliches Kunststoff-Spritzgussbauteil ausgeführt. Es weist entlang seiner Längserstreckung einen Hülsenabschnitt 21 und einen anschließenden Verlängerungsabschnitt 22 auf. Der Hülsenabschnitt 21 umschließt eine entlang der Längserstreckung ausgerichtete, als Hohlraum ausgebildete Schraubaufnahme. Er ist zu seinem vorderen Abschluss hin von einem Deckel 21.3 abgeschlossen. Der Deckel 21.3 ist umlaufend mit dem Mantel des Hülsenabschnitts 21, vorzugsweise einstückig, verbunden. In den Deckel 21.3 ist eine Positioniermarke 21.4 in Form einer Mulde eingeformt. Gegenüberliegend zu dem Deckel 21.3 ist der Hülsenabschnitt 21 offen.

Der Verlängerungsabschnitt 22 bildet eine durch Wandabschnitte 22.2 eingefasste, stirnseitig und gegenüberliegend zu einem Führungselement 23 offene Rinne 22.1 aus. Sie steht in geradliniger Verbindung zu der, vom Hülsenabschnitt 21 gebildeten Schraubaufnahme. Der Durchmesser der Rinne 22.1 als der innere Abstand der Wandabschnitte 22.2 zueinander entspricht dem Durchmesser der Schraubaufnahme des Hülsenabschnitts 21. Das als Führungsschiene ausgebildete Führungselement 23 ist an einer abgeflachten Seite des Hülsenabschnitts 21 und des Verlängerungsabschnitts 22 angeformt. Auf Seiten des Verlängerungsabschnittes 22 schließt sich dem Führungselement 23 ein gegenüber dem Führungselement 23 in Umfangsrichtung des Halteelements 20 verbreiterter Halteansatz 24 an. An den Wandabschnitten 22.2 des Verlängerungsabschnitts 22 sind in Längsrichtung des Halteelements 20 zueinander beabstandet angeordnete, in Umfangsrichtung des Halteelements 20 verlaufende Versteifungselemente 22.3 angeformt.

Der Verschluss 21.1 ist über ein Filmscharnier 21.2 mit dem Hülsenabschnitt 21 an dessen dem Verlängerungsabschnitt 22 zugewandten Ende verbunden. Dabei ist das Filmscharnier 21.2 gegenüberliegend zu dem Führungselement 23 angeordnet.

Fig. 9 zeigt das in Fig. 8 gezeigte Halteelement 20 mit geschlossenem Verschluss 21.1. Dazu ist das Filmscharnier 21.2 umgebogen und der Verschluss 21.1 in die dem Verlängerungsabschnitt 22 zugewandte Öffnung des Hülsenabschnitts 21 eingesteckt.

Die dem Verlängerungsabschnitt 22 zugewandte Öffnung des Hülsenabschnitts 21 ermöglicht die Herstellung des Halteelements 20 als Spitzgussteil. Dabei wird während des Spritzgussprozesses ein Schieber entlang der Rinne 22.1 des Verlängerungsabschnitts 22 in den Hülsenabschnitt 21 eingeführt und deren Schraubaufnahme, vorzugsweise für eine selbstfurchende Schraube, ausgeformt. Der Durchmesser der Rinne 22.1 ist daher vorteilhaft gleich dem Durchmesser der Schraubaufnahme des Hülsenabschnitts 21 gewählt. Es ist auch denkbar, den Durchmesser der Rinne 22.1 größer als den Durchmesser der Schraubaufnahme des Hülsenabschnitts 21 auszubilden.

In der Verwendung des Halteelements 20 wird die Schraubaufnahme des Hülsenabschnitts 21 durch den Verschluss 21.1 verschlossen, sodass kein Beton oder Mörtel rückseitig eindringen kann. Es ist daher von Vorteil, wenn das Halteelement 20 mit bereits durch den Verschluss 21.1 verschlossenem Hülsenabschnitt 21 ausgeliefert wird. Die Verbindung des Verschlusses 21.1 mittels des Filmscharniers 21.2 am rückseitigen Ende des Hülsenabschnitts ermöglicht in einfacher Weise das beispielsweise automatisierte Einführen des Verschlusses in die zugeordnete Öffnung des Hülsenabschnitts 21. Vorteilhaft ist dazu das Filmscharnier 21.2 derart angeordnet, dass sich sein Knickverlauf quer zur Längserstreckung des Halteelements ausbildet. Der Verschluss 21.1 wird dadurch beim Knicken des Filmscharniers 21.2 zu der Öffnung der Schraubaufnahme geleitet. Unterstützend wird der Verschluss 21.1 seitlich durch die Wandabschnitte 22.2 der Rinne 22.1 geführt. Daher sind der Verschluss 21.1, das Filmscharnier 21.2 und/oder ein zwischen dem Verschluss 21.1 und dem Filmscharnier 21.2 vorgesehener Übergangsabschnitt quer zur Längserstreckung des Halteelements 20 entsprechend oder geringfügig schmäler als der Abstand der gegenüberliegend angeordneten Wandabschnitte 22.2 der Rinne 22.1 dimensioniert. Durch diese Ausbildung erfolgt die gewünschte Führung des Verschlusses 21.1 mit geringem seitlichem Versatz.

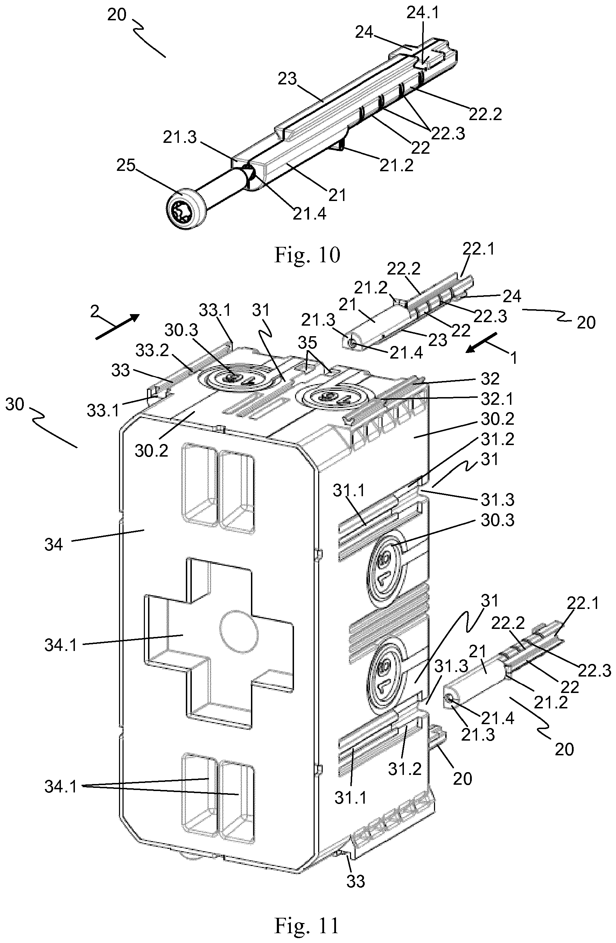

Fig. 10 zeigt in einer perspektivischen Darstellung das in Fig. 8 gezeigte Halteelement 20 mit einer Befestigungsschraube 25. Die Befestigungsschraube 25 (vorzugsweise eine selbstfurchende Schraube) ist mit ihrer Spitze auf die Positioniermarke 21.4 im Deckel 21.3 des Halteelements 20 ausgerichtet. Sie kann so in den Hülsenabschnitt 21 eingeschraubt werden, wobei sie den Deckel 21.3 durchstößt.

Die in Fig. 10 gewählte Perspektive zeigt das Halteelement 20 von seiner abgeflachten Seite. Das Führungselement 23 ist entlang der Längserstreckung des Halteelements 20 ausgerichtet mit dessen abgeflachten Seite einstückig verbunden. Sie ist in Form einer Feder eine Schwalbenschwanzführung ausgebildet. Bezogen auf den dem Deckel 21.3 zugewandten Ende des Hülsenabschnitts 21 ist das Führungselement 23 zurückgesetzt. Gegenüberliegend geht das Führungselement 23 in den Halteansatz 24 über. Der Halteansatz 24 ist quer zur Längserstreckung des Halteelements 20 gegenüber dem Führungselement 23 verbreitert ausgebildet. Er weist seitlich des Führungselements 23 zwei zum Hülsenabschnitt 21 hin ausgerichtete Anlaufschrägen 24.1 auf.

Die Versteifungselemente 22.3, das Führungselement 23 und der Halteansatz 24 bewirken eine Versteifung des Halteelements 20, insbesondere im Bereich der ausgebildeten Rinne 22.1.

Der Hülsenabschnitt 21 ist gegenüberliegend zu seinem Deckel 21.3 von dem in Fig. 8 gezeigten Verschluss 21.1 verschlossen, so dass lediglich das abgebogene Filmscharnier 21.2 zu erkennen ist.

Fig. 11 zeigt in einer perspektivischen Darstellung das Installationsgehäuse 30 mit einem aufgesetzten Gehäusedeckel 34 und zur Befestigung gegenüber dem Installationsgehäuse 30 ausgerichteten Halteelementen 20.

Das Installationsgehäuse 30 ist als Kunststoffbauteil hergestellt. Es weist eine umlaufende Gehäusewand 30.2 auf und ist rückseitig von einem in Fig. 14 gezeigten Gehäuseboden 30.1 abgeschlossen. Die zur Vorderseite des Installationsgehäuses 30 weisende Gehäuseöffnung ist von dem Gehäusedeckel 34 verschlossen. In den Gehäusedeckel 34 sind Geräteaufnahmen 34.1 eingeformt. Sie dienen beispielsweise der Aufnahme von nicht gezeigten Messgeräten zur Überprüfung der Ausrichtung des Installationsgehäuses 30.

Das Installationsgehäuse 30 ist vorliegend rechteckig als Zweiergehäuse ausgebildet. Installationsgehäuse 30 werden in unterschiedlichen Größen verwendet. Dabei erfolgt eine Erweiterung oder eine Größenreduzierung jeweils in einem vorgegebenen Rastermaß. Die kleinste Einheit bilden quadratische Einzelgehäuse, bei denen die vier Wandabschnitte der Gehäusewand 30.2 im kleinsten Rastermaß gleich dimensioniert ausgebildet sind. Es können drei- oder vielfach-Installationsgehäuse 30 vorgesehen sein, die jeweils um ein weiteres Rastermaß zueinander verlängert sind. Ebenso kann das Installationsgehäuse 30 in beiden Dimensionen quer zur Tiefenrichtung 2 in dem vorgegebenen Rastermaß erweitert werden.

An den Gehäusewänden 30.2 sind Kabeldurchbrüche 30.3 angelegt. Diese weisen umlaufende Sollbruchstellen auf und können in bekannter Weise mit geringer Krafteinwirkung leicht geöffnet werden. Kabel können durch die derart freigestellten Kabeldurchbrüche 30.3 in das Innere des Installationsgehäuses 30 geführt werden. Die an den schmalen Abschnitten der Gehäusewand 30.2 angeordneten Kabeldurchbrüche 30.3 sind gleich weit zueinander beabstandet wie die Kabeldurchführungen 16 der in den Fig. 1 bis 7 gezeigten Adapter 10.

Entlang der Kanten der zwischen den Wandabschnitten der Gehäusewand 30.2 gebildeten Ecken sind Federelemente 32 und Federaufnahmen 33 angeformt. Die Federelemente 32 und die Federaufnahmen 33 sind entlang ihrer Längserstreckung in Tiefenrichtung 2 ausgerichtet. Sie sind zu den kurzen Wandabschnitten des Installationsgehäuses 30 hin ausgerichtet. Dabei sind entlang jedes kurzen Wandabschnitts sowohl ein Federelement 32 wie auch eine Federaufnahme 33 vorgesehen. Entlang der langen Seite des Installationsgehäuses 30 ist dem Federelement 32 eine Federaufnahme 33 und der Federaufnahme 33 ein Federelement 32 gegenübergestellt. Umlaufend wechseln sich demnach Federelemente 32 und Federaufnahmen 33 ab.

Die Federelemente 32 und die Federaufnahmen 33 sind korrespondierend zu der ersten und der zweiten Gleitführung 17, 18 der in den Fig. 1 bis 7 gezeigten Adapters 10, 110 ausgebildet. Sie sind entsprechend als Schwalbenschwanzführung ausgeführt. Bezogen auf den vorderen Rand des Installationsgehäuses 30 sind die Federelemente 32 und die Federaufnahmen 33 zurückgesetzt. Im Mittenbereich des Federelements 32 ist ein erster Gegenanschlag 32.1 angeformt. Der Gegenanschlag 32.1 ist als die beiden im Winkel zueinander stehenden Schenkel der Schwalbenschwanzführung verbindender Steg ausgeführt. Er korrespondiert demnach mit dem ersten Anschlagansatz 17.4, wie er in der Führungsnut 17.1 der ersten Gleitführung 17 des Adapters 10 vorgesehen ist. Die Federaufnahme 33 weist an ihrem vorderen und an ihrem hinteren Ende jeweils eine Aussparung 33.1 auf, in welchen die Flanken der Schwalbenschwanzführung ausgespart sind. Im Mittenbereich der Federaufnahme 33 ist ein zweiter Gegenanschlag 33.2 angeformt. Dieser korrespondiert mit dem zweiten Anschlagansatz 18.2, wie er an der Feder 18.1 der zweiten Gleitführung 18 des Adapters 10 vorgesehen ist.

In die Gehäusewand 30.2 sind Halteelementaufnahmen 31 eingeformt. Diese weisen jeweils eine in Tiefenrichtung 2 ausgerichtete Führungselementaufnahme 31.1 auf. Der Führungselementaufnahme 31.1 sind in Tiefenrichtung 2 eine Halteansatzaufnahme 31.2 und eine Zugangsöffnung 31.3 nachgeordnet. Zur Vorderseite des Installationsgehäuses 30 hin ist die Führungselementaufnahme 31.1 geschlossen.

An den kurzen Seiten des Installationsgehäuses 30 ist jeweils eine Halteelementaufnahme 31 vorgesehen. Diese ist mittig an den jeweiligen kurzen Wandabschnitt angeordnet. An den langen Seiten des Installationsgehäuses 30 sind jeweils zwei Halteelementaufnahmen 31 eingeformt. Diese sind gleich weit zu den Ecken des Installationsgehäuses 30 beabstandet wie die Halteelementaufnahmen 31 an den kurzen Wandabschnitten. Die Halteelementaufnahmen 31 sind demnach in dem vorgegebenen Rastermaß des Installationsgehäuses 30 angeordnet.

Die Führungselementaufnahme 31 ist korrespondierend zu dem Führungselement 23 des Halteelements 20 ausgebildet. Sie bildet somit die Aufnahme einer Schwalbenschwanzführung. Die Halteansatzaufnahme 31.2 ist korrespondierend zu dem Halteansatz 24 des Halteelements 20 ausgebildet. Sie bietet Raum zur Aufnahme des Halteansatzes 24. Die Zugangsöffnung 31.3 ist in Verlängerung der Führungselementaufnahme 31.1 angeordnet und gewährt entgegen der Tiefenrichtung 2 Zugang zu der Halteansatzaufnahme 31.2.

Seitlich der Halteansatzaufnahmen 31.2 der Halteelementaufnahmen 31, wie sie zwischen dem zur Befestigung eines Adapters 10 vorgesehenen Federelement 32 und Federaufnahme 33 angeordnet sind, sind Gegenrastelemente 35 als Einbuchtungen in die Gehäusewand 30.2 eingeformt. Diese sind korrespondierend zu den Rastelementen 11.1 an dem Adapter 10, wie sie in den Fig. 2, 3, 5, 6 gezeigt sind, ausgebildet und angeordnet.

Die Halteelemente 20 sind zur Befestigung an dem Installationsgehäuse 30 ausgerichtet seitlich des Installationsgehäuses 30 angeordnet. Dazu sind die Halteelemente 20 entlang ihrer Längserstreckung in Tiefenrichtung 2 ausgerichtet und gegenüber der Zugangsöffnungen 31.3 der Halteelementaufnahmen 31 positioniert. Die zum Verlängerungsabschnitt 22 hin ausgerichteten Öffnungen der Hülsenabschnitte 21 sind durch die jeweiligen Verschlüsse 21.1 verschlossen.

Zur Befestigung an dem Installationsgehäuse 30 wird ein Halteelemente 20 mit seinem vorderen abgeflachten Bereich, in den das zurückgesetzte Führungselement 23 nicht geführt ist, auf den hinteren Rand der Gehäusewand 30.2 aufgelegt, sodass das Führungselement 23 zu der Zugangsöffnung 31.3 und der Führungselementaufnahme 31.1 hin ausgerichtet ist. Anschließend wird das Halteelement 20 entlang einer Einschubrichtung 1, die entgegen der Tiefenrichtung 2 ausgerichtet ist, mit seinem Führungselement 23 in die Führungselementaufnahme 31.1 der Halteelementaufnahme 31 des Installationsgehäuses 30 eingeschoben. Dazu wird das Führungselement 23 zunächst durch die Zugangsöffnung 31.3 und die anschließende Halteansatzaufnahme 31.2 geführt. Erreicht der Halteansatz 24 den Rand des Installationsgehäuses 30, so liegt er mit seinen Anlaufschrägen 24.1 an der zwischen der Gehäusewand 30.2 und dem Gehäuseboden 30.1 ausgebildeten Kante an. Beim weiteren Einschieben des Führungselements 23 des Halteelements 20 in die Führungselementaufnahme 31.1 der Halteelementaufnahme 31 wird das aus elastischem Kunststoff hergestellte Halteelement 20 im Bereich seines Verlängerungsabschnitts 22 durch Eingriff der Anlaufschrägen 24.1 an der Gehäusekante ausgelenkt. Dadurch kann das Halteelement 20 soweit in die Halteelementaufnahme 31 eingeschoben werden, bis der Halteansatz 24 in die Halteansatzaufnahme 31.2 einrastet, wobei der Verlängerungsabschnitt 22 zurückstellt. Durch den Eingriff des Halteansatzes 24 in der Halteansatzaufnahme 31.2 ist das Halteelement 20 in und entgegen der Einschubrichtung 1 und damit in und entgegen der Tiefenrichtung 2 an dem Installationsgehäuse 30 blockiert. Quer zur Tiefenrichtung 2 ist das Halteelement 20 durch Eingriff seines Führungselements 23 in die Führungselementaufnahme 31.1 der Halteelementaufnahme 31 gehalten.

Fig. 12 zeigt das in Fig. 11 gezeigte Installationsgehäuse 30 mit daran befestigten Halteelementen 20 und zur Montage gegenüber dem Installationsgehäuse 30 ausgerichteten Adaptern 10. Die Halteelemente 20 sind, wie zu Fig. 11 beschrieben, mit ihren Führungsschienen 23 auf die Halteelementaufnahmen 31 aufgeschoben und dadurch mit dem Installationsgehäuse 30 verbunden. Sie sind entlang der Tiefenrichtung 2 derart ausgerichtet, dass sie mit ihren längsseitigen Enden mit der Gehäusewand 30.2 und damit mit der Vorder- und der Rückseite des Installationsgehäuses 30 abschließen. Der Deckel 21.3 des Hülsenabschnitts 21 mit seiner Positioniermarke 21.4 ist der Vorderseite des Installationsgehäuses 30 zugewandt.

An dem Installationsgehäuse 30 sind vorliegend vier Halteelemente 20 befestigt. Dabei ist an jedem Wandabschnitt der Gehäusewand 30.2 ein Halteelement 20 vorgesehen. An den langen Wandabschnitten sind die Halteelemente 20 in die unteren Halteelementaufnahmen 31 eingeschoben. Die oberen Halteelementaufnahmen 31 sind frei. Es ist jedoch auch denkbar, alternativ oder zusätzlich zu den unteren Halteelementaufnahmen 31 an den oberen Halteelementaufnahmen 31 Halteelemente 20 zu befestigen.

Den kurzen Wandabschnitten des Installationsgehäuses 30 ist jeweils ein Adapter 10 zugeordnet. Diese sind mit ihren Anlageflächen 11.3 einander zugewandt ausgerichtet. Gegenüber dem Installationsgehäuse 30 sind die Adapter 10 derart positioniert, dass ihre Gleitführungen 17, 18 entlang der Tiefenrichtung 2 bzw. der Einschubrichtung 1 zu dem jeweiligen Federelement 32 bzw. der jeweiligen Federaufnahme 33 des Installationsgehäuses 30 fluchten. In dieser Position der Adapter 10 sind deren Aufnahmen 12 zu den zwischen den Federelementen 32 und den Federaufnahmen 33 des Installationsgehäuses 30 angeordneten Halteelemente 20 hin ausgerichtet.

Zur Befestigung eines Adapters 10 an dem Installationsgehäuse 30 wird er entlang der Einschubrichtung 1 auf das Installationsgehäuse 30 aufgeschoben. Dazu wird der Adapter 10 zunächst mit dem vorderen Ende seiner Anlagefläche 11.3 entlang der rückseitigen Kante der Gehäusewand 30.2 des Installationsgehäuses 30 aufgelegt. Wie bereits zu Figur. 3 beschrieben, ist die Feder 18.1 der zweiten Gleitführung 18 des Adapters 10 gegenüber der vorderen Kante des Trägerelements 11 zurückgesetzt. Die Schwalbenschwanzführung der Führungsnut 17.1 der ersten Gleitführung 17 des Adapters 10 ist in Ihrem vorderen Bereich durch die Aussparung 17.3 ausgespart. Der Adapter 10 kann somit mit dem vorderen Bereich seines Trägerelements 11 an die Gehäusewand 30.2 des Installationsgehäuses 30 angelegt werden, wobei das vordere Ende der Feder 18.1 des Adapters 10 in der Aussparung 33.1 der Federaufnahme 33 am Installationsgehäuse 30 und das Federelement 32 des Installationsgehäuses 30 mit seinem rückseitigen Ende in der Aussparung 17.3 der Führungsnut 17.1 am Adapter 10 eingeführt sind. Das rückseitige Ende des Verlängerungsabschnitts 22 des Halteelements 20 ist in dem vorderen Bereich der Aufnahme 12 des Adapters 10 positioniert. Der derart an das Installationsgehäuse 30 angelegte Adapter 10 kann jetzt entlang der Einschubrichtung 1 auf das Installationsgehäuse 30 aufgeschoben werden. Dabei gleitet das Federelement 32 des Installationsgehäuses 30 in die Führungsnut 17.1 der ersten Gleitführung 17 des Adapters 10. Gleichzeitig wird die Feder 18.1 der zweiten Gleitführung 18 des Adapters 10 in die Federaufnahme 33 am Installationsgehäuse 30 eingeschoben. Die Aufnahme 12 des Adapters 10 wird über das Halteelement 20 geführt.

Der Adapter 10 wird so lange in Einschubrichtung 1 auf das Installationsgehäuse 30 aufgeschoben, bis die Begrenzungselemente 11.2 an der Rückseite des Installationsgehäuses 30 anliegen. Der Stellweg des Adapters 10 in Einschubrichtung 1 ist auch durch den Eingriff des ersten Anschlagansatzes 17.4 der ersten Gleitführung 17 des Adapters 10 an dem ersten Gegenanschlag 32.1 des Federelements 32 an dem Installationsgehäuse 30 bzw. durch Eingriff des zweiten Anschlagansatzes 18.2 der Feder 18.1 der zweiten Gleitführung 18 des Adapters 10 an dem zweiten Gegenanschlag 33.2 der Federaufnahme 33 an dem Installationsgehäuse 30 begrenzt. Die seitlich der Aufnahme 12 an dem Adapter 10 angeordneten Rastelement 11.1, wie sie in den Fig. 2 und 3 gezeigt sind, greifen in die Gegenrastelement 35 am Installationsgehäuse 30 ein. Dadurch ist eine Bewegung des Adapters 10 in Tiefenrichtung 2 blockiert.

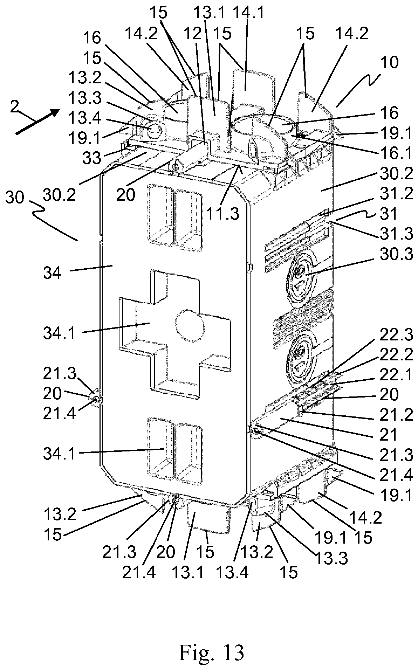

Fig. 13 zeigt das in Fig. 12 gezeigt Installationsgehäuse 30 mit den daran befestigten Halteelementen 20 und Adaptern 10.

Die Halteelemente 20 sind, wie zu den Fig. 11 und 12 beschrieben, auf die Halteelementaufnahmen 31 des Installationsgehäuses 30 aufgeschoben und dadurch mit dem Installationsgehäuse 30 verbunden. An den kurzen Wandabschnitten ist gegenüberliegend je ein Adapter 10 mit dem Installationsgehäuse 30 verbunden. Die Adapter 10 sind, wie zu Fig. 12 dargelegt, bis zum Anschlag auf das Installationsgehäuse 30 aufgeschoben und mit diesem verbunden. Sie liegen mit ihren Anlageflächen 11.3 an der Gehäusewand 30.2 des Installationsgehäuses 30 an. In ihrer Endposition sind die Adapter 10 mit ihren vorderen Abschlüssen zurückgesetzt gegenüber dem vorderen Abschluss des Installationsgehäuses 30 angeordnet. Die im Bereich der Adapter 10 angeordneten Halteelemente 20 sind somit in ihrem hinteren Abschnitt mit dem Verlängerungsabschnitt 22 von der Aufnahme 12 des jeweils Adapters 10 umfasst. Die Kabeldurchführungen 16 der Adapter 10 sind in der Endposition der Adapter 10 gegenüberliegend zu den in Figur. 11 gezeigten Kabeldurchbrüchen 30.3 an den kurzen Seiten der Gehäusewand 30.2 angeordnet. Kabel können so von außen durch die Kabeldurchführung 16 und die Kabeldurchbrüche 30.3 in das Innere des Installationsgehäuses 30 geführt werden.

Es ist jeweils ein Adapter 10 an den kurzen Seiten der Gehäusewand 30.2 vorgesehen. Für größere Installationsgehäuse 30, beispielsweise für quadratische Installationsgehäuse 30 in mehrfachem Rastermaß, können auch mehr als zwei Adapter 10 vorgesehen sein.

In der in Fig. 13 gezeigten Ausbaustufe kann das Installationsgehäuse 30 mit den Adaptern 10 in die Wandausnehmung 41, wie sie in Fig. 14 gezeigt ist, eingesetzt werden.

Fig. 14 zeigt in einer perspektivischen Darstellung einen Ausschnitt einer Wand 40 mit der Wandausnehmung 41 und einem darin angeordneten Installationsgehäuse 30.

Fig. 15 zeigt den in Fig. 14 gezeigten Wandausschnitt in einer Blickrichtung in Tiefenrichtung 2 der Wandausnehmung 41.

Die Wand 40 ist vorliegend als Ziegelwand ausgeführt. Das Installationsgehäuse 30 mit den Adaptern 10 kann jedoch auch in eine Wandausnehmung 41 einer Wand 40 aus Beton oder aus anderen Materialien eingesetzt werden.

Die Wandausnehmung 41 ist vorliegend aus zwei nebeneinander angeordneten, kreisrunden Bohrungen, welche sich teilweise überlappen, gebildet. Dabei ist der Abstand der Bohrung in vorgegebenem Rastermaß gewählt. Auch der Durchmesser der Bohrungen ist vorgegeben, sodass entsprechend standardisierte Installationsgehäuse 30 mit Adaptern 10 in die Wandausnehmung 41 eingesetzt werden können.

Das Installationsgehäuse 30 ist, zusammen mit den daran befestigten Halteelementen 20 und Adaptern 10, entlang der Tiefenrichtung 2 in die Wandausnehmung 41 eingeschoben. Die an den äußeren Enden der Positionierlaschen 13.1, 13.2, 14.1, 14.2 vorgesehenen Anlegekanten 15 folgen der Kontur der Seitenwandung 42 der Wandausnehmung 41. Sie sind dazu vorliegend entlang eines Radius um eine gemeinsame, in Tiefenrichtung 2 ausgerichtete Mittelachse angeordnet.

Der Abstand der Anlegekante 15 der Positionierlaschen 13.1, 13.2, 14.1, 14.2 gegenüber dem Trägerelement 11 kann, bezogen auf die vorliegende Größe der Wandausnehmung 41, derart ausgebildet sein, dass die Anlegekante beim Einschieben des Installationsgehäuses 30 in die Wandausnehmung 41 über deren Rand überstehen. Beim Einsetzen des Installationsgehäuses 30 mit den Adaptern 10 in die Wandausnehmung 41 werden die Positionierlaschen 13.1, 13.2, 14.1, 14.2 dann mit ihren Anlegekanten 15 federelastisch verstellt, mithin in Richtung der Öffnung der Wandausnehmung 41. in der Montageposition des Installationsgehäuses 30 liegen die Anlegekanten 15 an der Seitenwandung 42 der Wandausnehmung 41 an, wobei die Positionierlaschen 13.1, 13.2, 14.1, 14.2 geringfügig vorgespannt zur Öffnung der Wandausnehmung 41 hin geneigt sind. Zum Herausnehmen des Installationsgehäuses 30 aus der Wandausnehmung 41 müssen die Positionierlaschen 13.1, 13.2, 14.1, 14.2 in die entgegengesetzte Richtung umgebogen werden, wodurch sie fest gegen die Seitenwandung 42 angedrückt werden. Dadurch wird dem Herausziehen des Installationsgehäuses 30 aus der Wandausnehmung 41 ein Widerstand entgegengesetzt und das Installationsgehäuse 30 in der Wandausnehmung 41 gehalten.

Durch Drehen des Installationsgehäuses 30 um die Tiefenrichtung 2 kann das Installationsgehäuse 30 exakt ausgerichtet werden. Dazu kann der in Fig. 11 gezeigte Gehäusedeckel 34 auf das Isolationsgehäuse 30 aufgesetzt und in eine der Geräteaufnahmen 34.1 beispielsweise eine Wasserwaage eingesetzt werden. Vorzugsweise wird das Installationsgehäuse 30 so tief in die Wandausnehmung 41 eingeschoben, dass es mit der vorderen Fläche der Wand 40 abschließt oder entsprechend der Dicke einer auf die Wand 40 aufzutragenden Putzschicht aus der Wandausnehmung 41 herausragt.

Ist das Installationsgehäuse 30 korrekt ausgerichtet, kann es mittels der Schrauben 10.1 an der Wand 40 festgelegt werden. Dazu wird jeweils eine der Schrauben 10.1 durch eine schräg zur Tiefenrichtung 2 ausgerichtete Schraubenaufnahme 13.4 eines Montageelements 13.3 geführt, wie dies in Fig. 7 gezeigt. Die Schrauben 10.1 werden dann in die Seitenwandung 42 der Wand 40 eingeschraubt.

Sind die Anlegekante 15 der Positionierlaschen 13.1, 13.2, 14.1, 14.2 der an dem Installationsgehäuse 30 befestigten Adapter 10 beim Einsetzen des Installationsgehäuses 30 in die Wandausnehmung 41 entlang dem Rand der Bohrungen der Wandausnehmung 41 angeordnet, so kann das Installationsgehäuse 30 zusammen mit den Adaptern 10 leichtgängig in die Wandausnehmung 41 eingeschoben, ausgerichtet und mittels der durch die Schraubenaufnahmen 13.4 geführten Schrauben 10.1 festgelegt werden.

Es ist denkbar, dass Installationsgehäuse 30 mittels einer oder mehrerer durch ein oder mehrere Halteelemente 20 geführte Montageschrauben mit der Wand 40 zu verbinden. Dies kann zusätzlich zu der Befestigung mit Hilfe der Adapter 10 erfolgen. Eine solche Befestigung mittels durch die Halteelemente 20 geführte Montageschrauben kann auch dann vorteilhaft sein, wenn der Radius der Bohrungen, welche die Wandausnehmung 41 bilden, zu groß ist, wenn also die Anlegekanten 15 der Adapter 10 nicht an die Seitenwandung 42 der Wandausnehmung 41 gedrückt werden. Zur exakten Positionierung der Montageschraube kann diese mit ihrer Spitze an der Positioniermarke 21.4 eines Halteelements 20 angesetzt und dann die Montageschraube durch den aus Kunststoff gefertigte Deckel 21.3 des Halteelements 20 gestoßen werden. Die Montageschraube wird anschließend durch den Hülsenabschnitt 21 und die Rinne 22.1 des Halteelements 20, wie sie in den Fig. 8 und 9 gezeigt sind, zur Rückseite der Wandausnehmung 41 geführt und dort eingeschraubt. Dabei kann der Verschluss 21.1 des Hülsenabschnitts 21 von der Montageschraube geöffnet oder durchstoßen werden.

Fig. 16 zeigt in einer perspektivischen Darstellung das in Fig. 13 gezeigte Installationsgehäuse 30 mit einem teilweise in das Installationsgehäuse 30 eingeschoben Einsatz 50. Bei dem Einsatz 50 kann es sich um eine beliebige, für die Anordnung in dem Installationsgehäuse 30 ausgebildete elektronische Installationseinheit handeln, beispielsweise eine Internet- oder eine Telefonanschlussdose.

Der Einsatz 50 wird in das Installationsgehäuse 30 eingeschoben und dort mittels eines aufgesetzten Rahmens 51 gehalten. Der Rahmen 51 weist dazu Bohrungen auf, durch welche die Befestigungsschrauben 25 geführt und in die an dem Isolationsgehäuse 30 festgelegten Halteelemente 20 eingeschraubt werden.

Die Adapter 10 eignen sich besonders für die Befestigung von Installationsgehäusen 30 in Ziegelmauern, können aber auch vorteilhaft in aus anderen Materialien erstellten Wänden 40 eingesetzt werden. Sie können einfach oben und unten an dem Isolationsgehäuse 30 vormontiert und anschließend in die Wandausnehmung 41 eingeschoben. Durch die Positionierlaschen 13.1, 13.2, 14.1, 14.2 ist das Installationsgehäuse 30 fest an der Wand 40 gehalten. Durch die radial geschnittenen Positionierlaschen 13.1, 13.2, 14.1, 14.2 ergibt sich eine ausreichende Flexibilität, um das Installationsgehäuse 30 gerade auszurichten. Ist die Wandausnehmung 41 sehr groß ausgebildet, kann das Installationsgehäuse 30 vorteilhaft durch Montageschrauben, welche durch die Halteelemente 20 direkt in die Wand 40 eingeschraubt werden, innerhalb der Wandausnehmung 41 an der Wand 40 befestigt werden.

Die Halteelemente 20 können sowohl zur Befestigung des Installationsgehäuses 30 an der Wand 40 wie auch zur Fixierung eines in dem Installationsgehäuse 30 eingesetzten Einsatzes 50 verwendet sein Nach dem Verputzen beziehungsweise Polieren, während dem das Installationsgehäuse 30 vorzugsweise mit dem Gehäusedeckel 34 verschlossen ist, können die Halteelemente 20 einfach aufgefunden werden. Durch den rückseitig in die Öffnung des Hülsenabschnitts 21 eingesetzten Verschluss 21.1 ist sichergestellt, dass kein Beton oder Mörtel in das Innere des Hülsenabschnitts 21 eindringt. Durch eingegossenen Beton wird der Verschluss 21.1 gegen die rückseitige Öffnung des Hülsenabschnitts 21 gedrückt, sodass der Hülsenabschnitt 21 sicher verschlossen bleibt. Zur Vorderseite hin ist der Hülsenabschnitt 21 durch den Deckel 21.3 verschlossen, sodass auch hier kein Beton, Mörtel oder Putz in den Hülsenabschnitt 21 eindringen kann. Eine Befestigungsschraube 25 mit spitzem Ansatz kann direkt durch den Deckel 21.3 hindurch in den Hülsenabschnitt 21 eingeschraubt werden, es ist kein zusätzliches Hilfswerkzeug zum Öffnen des Hülsenabschnitts 21 erforderlich. Das Führungselement 23 führt in Kombination mit dem Halteansatz 24 zu einer belastbaren Halterung der Halteelemente 20 an dem Installationsgehäuse 30.

In den Fig. 11 bis 16 ist die Montage des Installationsgehäuses 30 mit Adaptern 10 gezeigt, welche Montageelemente 13.3 zur Befestigung mittels Schrauben 10.1 aufweisen und wie sie in den Fig. 1 bis 3 und 7 gezeigt sind. Bei der Verwendung des in Fig. 4 bis 6 gezeigten zweiten Adapters 110 sind keine solchen Montageelemente 13.3 vorgesehen. Der zweite Adapter 110 kann entsprechend der vorangegangenen Beschreibung zu dem Adapter 10 mit dem Installationsgehäuse 30 verbunden werden. Die Funktion der Halteelemente 20 ist dabei unverändert. Beim Einschieben des Installationsgehäuses 30 mit derart ausgebildeten, zweiten Adaptern 110 greifen die zweiten Fixieransätze 19.2, wie sie entlang der Anlegekanten 15 der mittigen Positionierlaschen 13.1, 14.1 angeformt sind, verstärkt in die Seitenwandung 42 der Wandausnehmung 41 ein. Dadurch ist das Installationsgehäuse 30 auch ohne zusätzliche Schrauben 10.1 sicher in der Wandausnehmung 41 gehalten, kann aber dennoch in Umfangsrichtung ausgerichtet werden. Durch die zweiten Fixieransätze 19.2 können Abweichungen des Durchmessers der Bohrungen, durch welche die Wandausnehmung 41 gebildet ist, ausgeglichen werden. So greifen die zweiten Fixieransätze 19.2 in die Seidenwandung 42 ein, wenn der Radius der Bohrungen größer ausfällt als der Radius, auf dem die Anlegekanten 15 der Positionierlaschen 13.1, 13.2, 14.1, 14.2 angeordnet sind.

## Patentansprüche

1. Adapter (10, 110) zur Positionierung und Befestigung eines Installationsgehäuses (30) in einer in eine Wand (40) eingebrachten Wandausnehmung (41), wobei der Adapter (10, 110) ein Trägerelement (11) aufweist, wobei an dem Trägerelement (11) eine Anlagefläche (11.3) zur mittelbaren oder unmittelbaren Anlage an dem Installationsgehäuse (30) vorgesehen ist,
**dadurch gekennzeichnet,**
**dass** das Trägerelement (11) zumindest ein Anschlusselement zur Befestigung an dem Installationsgehäuse (30) aufweist,
**dass** an dem Trägerelement (11) gegenüberliegend zu der Anlagefläche (11.3) in Tiefenrichtung (2) und quer zur Tiefenrichtung (2) beabstandet zueinander angeordnete Positionierlaschen (13.1, 13.2, 14.1, 14.2) angeordnet sind,
und **dass** die Positionierlaschen (13.1, 13.2, 14.1, 14.2) von dem Trägerelement (11) weg weisend ausgerichtet sind und von dem Trägerelement (11) abgewandt Anlegekanten (15) ausbilden.

2. Adapter (10, 110) nach Anspruch 1, **dadurch gekennzeichnet, dass** wenigstens eine der Positionierlaschen (13.1, 13.2, 14.1, 14.2) einen Federbereich bildet oder aufweist, derart, dass die Anlegekante (15) federelastisch gegenüber dem Trägerelement (11) zumindest teilweise in und entgegen der Tiefenrichtung (2) auslenkbar ist.

3. Adapter (10, 110) nach Anspruch 1 oder 2, **dadurch gekennzeichnet, dass** der Adapter (10, 110) als Kunststoffteil ausgebildet ist, wobei die Positionierlaschen (13.1, 13.2, 14.1, 14.2) einteilig an das Trägerelement (11) angeformt sind.

4. Adapter (10, 110) nach einem der Ansprüche 1 bis 3, **dadurch gekennzeichnet, dass** quer zur Tiefenrichtung (2) zwei oder mehrere Positionierlaschen (13.1, 13.2, 14.1, 14.2), vorzugsweise drei Positionierlaschen (13.1, 13.2, 14.1, 14.2), nebeneinander angeordnet sind und/oder dass in Tiefenrichtung (2) jeweils zwei oder mehrere Positionierlaschen (13.1, 13.2, 14.1, 14.2), vorzugsweise zwei Positionierlaschen (13.1, 13.2, 14.1, 14.2), hintereinander angeordnet sind.

5. Adapter (10, 110) nach einem der Ansprüche 1 bis 4, **dadurch gekennzeichnet, dass** quer zur Tiefenrichtung (2) wenigstens drei Positionierlaschen (13.1, 13.2, 14.1, 14.2) vorgesehene sind, wobei eine mittige Positionierlasche (13.1, 14.1) mittig vom Trägerelement absteht, und wobei seitlich zu der mittigen Positionierlasche (13.1, 14.1) die seitlichen Positionierlaschen (13.2, 14.2) von dem Trägerelement (11) abstehen, und dass die Anlegekante (15) der mittigen Positionierlasche (13.1, 14.1) in größerem Abstand von dem Trägerelement (11) gehalten ist als die Anlegekante (15) der seitlichen Positionierlaschen (13.2, 14.2).

6. Adapter (10, 110) nach einem der Ansprüche 1 bis 5, **dadurch gekennzeichnet, dass** die Anlegekanten (15) quer zur Tiefenrichtung (2) zueinander benachbarter Positionierlaschen (13.1, 13.2, 14.1, 14.2) auf einem gleichem Radius zu einer gemeinsamen, in Tiefenrichtung (2) ausgerichteten Mittelachse verlaufend angeordnet sind.

7. Adapter (10, 110) nach einem der Ansprüche 1 bis 6, **dadurch gekennzeichnet, dass** an dem Trägerelement (11) und/oder an einer oder mehrere der Positionierlaschen (13.1, 13.2, 14.1, 14.2) ein oder mehrere Fixieransätze (19.1, 19.2) abstehend angeordnet sind.

8. Adapter (10, 110) nach einem der Ansprüche 1 bis 7, **dadurch gekennzeichnet, dass** das zumindest eine Anschlusselement als Gleitführung (17, 18) ausgebildet ist, vorzugsweise dass das zumindest eine Anschlusselement als in Tiefenrichtung (2) ausgerichtete Gleitführung (17, 18) ausgebildet ist, besonders bevorzugt dass das zumindest eine Anschlusselement als in Tiefenrichtung (3) ausgerichtete Gleitführung (17, 18) in Form einer Schwalbenschwanzführung ausgebildet ist.

9. Adapter (10, 110) nach Anspruch 8, **dadurch gekennzeichnet, dass** gegenüberliegend und quer zur Gleitführung (17, 18) angeordnet und ausgerichtet zumindest eine Positionierlasche (13.1, 13.2, 14.1, 14.2) mit dem Trägerelement (11) verbunden ist.

10. Adapter (10, 110) nach einem der Ansprüche 1 bis 9, **dadurch gekennzeichnet, dass** an dem Trägerelement (11) und/oder dem Anschlusselement zumindest ein Begrenzungselement (11.2) zur Begrenzung des Stellwegs des Installationsgehäuses (30) gegenüber dem Adapter (10, 110) in Tiefenrichtung (2) angeordnet ist und/oder dass an dem Trägerelement (11) und/oder dem Anschlusselement zumindest ein Rastelement (11.1) zur Ausbildung einer Rastverbindung mit einem an dem Installationsgehäuse (30) vorgesehenen Gegenrastelement (35) angeordnet ist.

11. Adapter (10, 110) nach Anspruch 10, **dadurch gekennzeichnet, dass** das Begrenzungselement (11.2) an dem Träger (11) einteilig angeformt ist und über die Anlagefläche (11.3) vorsteht.

12. Adapter (10, 110) nach einem der Ansprüche 1 bis 11, **dadurch gekennzeichnet, dass** an dem Trägerelement (11) und/oder an einer oder mehrere der Positionierlaschen (13.1, 13.2, 14.1, 14.2), vorzugsweise an den vorderen äußeren Positionierlaschen (13.1, 13.2, 14.1, 14.2), Montageelemente (13.3) mit jeweils einer schräg zur Tiefenrichtung (2) ausgerichteten Schraubenaufnahmen (13.4) angeordnet sind.

13. Adapter (10, 110) nach einem der Ansprüche 1 bis 12, **dadurch gekennzeichnet, dass** der Adapter (10, 110) zumindest eine sich in Tiefenrichtung (2) erstreckende, zur Unterseite des Adapters (10, 110) und in Tiefenrichtung (2) hin geöffnete Aufnahme (12) aufweist.

14. Adapter nach Anspruch 13, **dadurch gekennzeichnet, dass** die Aufnahme (12) von Wandelementen (12.2) begrenzt ist, die über die Oberseite des Trägerelements (11), welche der Anlagefläche (11.3) abgekehrt ist, vorstehen, und dass zumindest eine Positionierlasche (13.1, 13.2, 14.1, 14.2) die Aufnahme (12) zumindest bereichsweise übergreift und wenigstens teilweise an die Wandelemente (12.2) einteilig angeformt ist.

15. Adapter (10, 110) nach einem der Ansprüche 1 bis 14, **dadurch gekennzeichnet, dass** das Trägerelement (11) von zumindest einem, als Kabeldurchführung (16) ausgebildeten Durchbruch durchdrungen ist.

16. Adapter (10, 110) nach einem der Ansprüche 1 bis 15, **dadurch gekennzeichnet, dass** die Positionierlaschen (13.1, 13.2, 14.1, 14.2) flächig ausgebildet und quer zur Tiefenrichtung (2) ausgerichtet sind.

## Claims

1. Adapter (10, 110) for positioning and fastening an installation housing (30) in a wall recess (41) made in a wall (40), the adapter (10, 110) having a support element (11), an abutment surface (11.3) being provided on the support element (11) for indirect or direct abutment against the installation housing (30),
**characterized in**
**in that** the support element (11) has at least one connection element for fastening to the installation housing (30),
**in that** positioning tabs (13.1, 13.2, 14.1, 14.2) are arranged on the support element (11) opposite the abutment surface (11.3) at a distance from one another in the depth direction (2) and transversely with respect to the depth direction (2)
and **in that** the positioning tabs (13.1, 13.2, 14.1, 14.2) are oriented facing away from the support element (11) and form contact edges (15) facing away from the carrier element (11).

2. Adapter (10, 110) according to claim 1, **characterized in that** at least one of the positioning tabs (13.1, 13.2, 14.1, 14.2) forms or has a spring region such that the contact edge (15) can be deflected resiliently with respect to the support element (11) at least partially in and against the depth direction (2).

3. Adapter (10, 110) according to claim 1 or 2, **characterized in that** the adapter (10, 110) is designed as a plastic part, the positioning tabs (13.1, 13.2, 14.1, 14.2) being integrally formed on the support element (11).

4. Adapter (10, 110) according to one of claims 1 to 3, **characterized in that** transversely to the depth direction (2) two or more positioning tabs (13.1, 13.2, 14.1, 14.2), preferably three positioning tabs (13.1, 13.2, 14.1, 14. 2), are arranged next to one another and/or **in that** in each case two or more positioning tabs (13.1, 13.2, 14.1, 14.2), preferably two positioning tabs (13.1, 13.2, 14.1, 14.2), are arranged one behind the other in the depth direction (2).

5. Adapter (10, 110) according to one of claims 1 to 4, **characterized in that** at least three positioning tabs (13.1, 13.2, 14.1, 14.2) are provided transversely to the depth direction (2), a central positioning tab (13.1, 14.1) projecting centrally from the support element, and lateral to the central positioning tab (13. 1, 14.1), the lateral positioning tabs (13.2, 14.2) projecting from the support element (11), and **in that** the contact edge (15) of the central positioning tab (13.1, 14.1) is held at a greater distance from the support element (11) than the contact edge (15) of the lateral positioning tabs (13.2, 14.2).

6. Adapter (10, 110) according to one of the claims 1 to 5, **characterized in that** the contact edges (15) transverse to the depth direction (2) of positioning tabs (13.1, 13.2, 14.1, 14.2) adjacent to one another are arranged to run on an identical radius to a common central axis aligned in the depth direction (2).

7. Adapter (10, 110) according to one of claims 1 to 6, **characterized in that** one or more fixing lugs (19.1, 19.2) are arranged projecting on the support element (11) and/or on one or more of the positioning lugs (13.1, 13.2, 14.1, 14.2).

8. Adapter (10, 110) according to one of claims 1 to 7, **characterized in that** the at least one connecting element is designed as a sliding guide (17, 18), preferably **in that** the at least one connecting element is designed as a sliding guide (17, 18) aligned in the depth direction (2), particularly preferably **in that** the at least one connecting element is designed as a sliding guide (17, 18) aligned in the depth direction (3) in the form of a dovetail guide.

9. Adapter (10, 110) according to claim 8, **characterized in that** at least one positioning tab (13.1, 13.2, 14.1, 14.2) is connected to the support element (11) opposite and aligned transversely to the sliding guide (17, 18).

10. Adapter (10, 110) according to one of claims 1 to 9, **characterized in that** at least one limiting element (11.2) is arranged on the support element (11) and/or the connection element for limiting the adjustment path of the installation housing (30) with respect to the adapter (10, 110) in the depth direction (2) and/or **in that** at least one latching element (11.1) is arranged on the support element (11) and/or the connection element for forming a latching connection with a mating latching element (35) provided on the installation housing (30).

11. Adapter (10, 110) according to claim 10, **characterized in that** the limiting element (11.2) is integrally formed on the support (11) and projects beyond the contact surface (11.3).

12. Adapter (10, 110) according to one of the claims 1 to 11, **characterized in that** on the support element (11) and/or on one or more of the positioning lugs (13.1, 13.2, 14.1, 14.2), preferably on the front outer positioning lugs (13.1, 13.2, 14.1, 14.2), mounting elements (13.3) are arranged, each with a screw receptacle (13.4) aligned obliquely to the depth direction (2).

13. Adapter (10, 110) according to one of claims 1 to 12, **characterized in that** the adapter (10, 110) has at least one receptacle (12) extending in the depth direction (2) and opening towards the underside of the adapter (10, 110) and in the depth direction (2).

14. Adapter according to claim 13, **characterized in that** the receptacle (12) is delimited by wall elements (12.2) which project beyond the upper side of the support element (11), which is remote from the contact surface (11.3), and **in that** at least one positioning tab (13.1, 13.2, 14.1, 14.2) engages over the receptacle (12) at least in regions and is at least partially integrally formed on the wall elements (12.2).

15. Adapter (10, 110) according to one of claims 1 to 14, **characterized in that** the support element (11) is penetrated by at least one opening designed as a cable bushing (16).

16. Adapter (10, 110) according to one of the claims 1 to 15, **characterized in that** the positioning tabs (13.1, 13.2, 14.1, 14.2) are flat and aligned transversely to the depth direction (2).

## Revendications

1. Adaptateur (10, 110) pour le positionnement et la fixation d'un boîtier d'installation (30) dans un évidement de paroi (41) pratiqué dans une paroi (40), l'adaptateur (10, 110) présentant un élément de support (11), une surface d'appui (11.3) étant prévue sur l'élément de support (11) pour l'appui direct ou indirect sur le boîtier d'installation (30),
**caractérisé en ce que**
que l'élément de support (11) présente au moins un élément de raccordement pour la fixation sur le boîtier d'installation (30),
que des pattes de positionnement (13.1, 13.2, 14.1, 14.2) disposées à distance les unes des autres dans le sens de la profondeur (2) et transversalement au sens de la profondeur (2) sont disposées sur l'élément de support (11) en face de la surface d'appui (11.3),
et **en ce que** les pattes de positionnement (13.1, 13.2, 14.1, 14.2) sont orientées en s'éloignant de l'élément de support (11) et forment des arêtes d'appui (15) détournées de l'élément de support (11).

2. Adaptateur (10, 110) selon la revendication 1, **caractérisé en ce qu'**au moins l'une des pattes de positionnement (13.1, 13.2, 14.1, 14.2) forme ou présente une zone élastique, de telle sorte que l'arête d'appui (15) peut être déviée élastiquement par rapport à l'élément de support (11) au moins partiellement dans la direction de la profondeur (2) et dans le sens inverse.

3. Adaptateur (10, 110) selon la revendication 1 ou 2, **caractérisé en ce que** l'adaptateur (10, 110) est conçu comme une pièce en matière plastique, les pattes de positionnement (13.1, 13.2, 14.1, 14.2) étant formées d'une seule pièce sur l'élément de support (11).

4. Adaptateur (10, 110) selon l'une des revendications 1 à 3, **caractérisé en ce que**, transversalement à la direction de la profondeur (2), deux ou plusieurs pattes de positionnement (13.1, 13.2, 14.1, 14.2), de préférence trois pattes de positionnement (13.1, 13.2, 14.1, 14.2), sont disposées en série. 2), sont disposées les unes à côté des autres et/ou que deux ou plusieurs pattes de positionnement (13.1, 13.2, 14.1, 14.2), de préférence deux pattes de positionnement (13.1, 13.2, 14.1, 14.2), sont disposées les unes derrière les autres dans le sens de la profondeur (2).

5. Adaptateur (10, 110) selon l'une des revendications 1 à 4, **caractérisé en ce qu'**au moins trois pattes de positionnement (13.1, 13.2, 14.1, 14.2) sont prévues transversalement à la direction de la profondeur (2), une patte de positionnement centrale (13.1, 14.1) dépassant au centre de l'élément de support, et des pattes de positionnement latérales à la patte de positionnement centrale (13. 1, 14.1), les pattes de positionnement latérales (13.2, 14.2) dépassent de l'élément de support (11), et **en ce que** le bord d'appui (15) de la patte de positionnement centrale (13.1, 14.1) est maintenu à une plus grande distance de l'élément de support (11) que le bord d'appui (15) des pattes de positionnement latérales (13.2, 14.2).

6. Adaptateur (10, 110) selon l'une des revendications 1 à 5, **caractérisé en ce que** les arêtes d'appui (15) de pattes de positionnement (13.1, 13.2, 14.1, 14.2) voisines les unes des autres sont disposées transversalement à la direction de la profondeur (2) en s'étendant sur un même rayon par rapport à un axe central commun orienté dans la direction de la profondeur (2).

7. Adaptateur (10, 110) selon l'une des revendications 1 à 6, **caractérisé en ce qu'**un ou plusieurs appendices de fixation (19.1, 19.2) sont disposés en saillie sur l'élément de support (11) et/ou sur une ou plusieurs des pattes de positionnement (13.1, 13.2, 14.1, 14.2).

8. Adaptateur (10, 110) selon l'une des revendications 1 à 7, **caractérisé en ce que** l'au moins un élément de raccordement est conçu comme un guide coulissant (17, 18), de préférence **en ce que** l'au moins un élément de raccordement est conçu comme un guide coulissant (17, 18) orienté dans le sens de la profondeur (2), de manière particulièrement préférée **en ce que** l'au moins un élément de raccordement est conçu comme un guide coulissant (17, 18) orienté dans le sens de la profondeur (3) sous la forme d'un guide en queue d'aronde.

9. Adaptateur (10, 110) selon la revendication 8, **caractérisé en ce qu'**au moins une patte de positionnement (13.1, 13.2, 14.1, 14.2) est reliée à l'élément de support (11) en face et transversalement à la glissière (17, 18) et orientée.

10. Adaptateur (10, 110) selon l'une des revendications 1 à 9, **caractérisé en ce qu'**au moins un élément de limitation (11.2) est disposé sur l'élément de support (11) et/ou l'élément de raccordement pour limiter la course de positionnement du boîtier d'installation (30) par rapport à l'adaptateur (10, 110) dans le sens de la profondeur (2) et/ou **en ce qu'**au moins un élément d'encliquetage (11.1) est disposé sur l'élément de support (11) et/ou l'élément de raccordement pour former une liaison par encliquetage avec un élément d'encliquetage complémentaire (35) prévu sur le boîtier d'installation (30).

11. Adaptateur (10, 110) selon la revendication 10, **caractérisé en ce que** l'élément de délimitation (11.2) est formé d'une seule pièce sur le support (11) et dépasse de la surface d'appui (11.3).

12. Adaptateur (10, 110) selon l'une des revendications 1 à 11, **caractérisé en ce que** des éléments de montage (13.3) avec respectivement un logement de vis (13.4) orienté en biais par rapport à la direction de profondeur (2) sont disposés sur l'élément de support (11) et/ou sur une ou plusieurs des pattes de positionnement (13.1, 13.2, 14.1, 14.2), de préférence sur les pattes de positionnement extérieures avant (13.1, 13.2, 14.1, 14.2).

13. Adaptateur (10, 110) selon l'une des revendications 1 à 12, **caractérisé en ce que** l'adaptateur (10, 110) comporte au moins un logement (12) s'étendant dans la direction de la profondeur (2) et ouvert vers la face inférieure de l'adaptateur (10, 110) et dans la direction de la profondeur (2).

14. Adaptateur selon la revendication 13, **caractérisé en ce que** le logement (12) est délimité par des éléments de paroi (12.2) qui dépassent de la face supérieure de l'élément de support (11), laquelle est opposée à la surface d'appui (11.3), et **en ce qu'**au moins une patte de positionnement (13.1, 13.2, 14.1, 14.2) recouvre le logement (12) au moins par endroits et est formée d'une seule pièce au moins partiellement sur les éléments de paroi (12.2).

15. Adaptateur (10, 110) selon l'une des revendications 1 à 14, **caractérisé en ce que** l'élément de support (11) est traversé par au moins un passage conçu comme passage de câble (16).

16. Adaptateur (10, 110) selon l'une des revendications 1 à 15, **caractérisé en ce que** les pattes de positionnement (13.1, 13.2, 14.1, 14.2) sont plates et orientées transversalement à la direction de la profondeur (2).
